(19) Europäisches Patentamt
European Patent Office
Office européen des brevets

(11) EP 3 575 762 A1

(12) EUROPEAN PATENT APPLICATION

(43) Date of publication:
04.12.2019 Bulletin 2019/49

(21) Application number: 19176511.4

(22) Date of filing: 24.05.2019

(51) Int Cl.:
*G01K 3/04* (2006.01) *G01K 11/12* (2006.01)
*H04N 1/00* (2006.01) *H04N 1/56* (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: 30.05.2018 JP 2018103153

(71) Applicant: **Seiko Instruments Inc.**
**Chiba-shi, Chiba 261-8507 (JP)**

(72) Inventors:
- **SATO, Yoshinori**
  **Chiba-shi, Chiba 261-8507 (JP)**
- **SAMBONGI, Norimitsu**
  **Chiba-shi, Chiba 261-8507 (JP)**
- **YAMAMOTO, Takashi**
  **Chiba-shi, Chiba 261-8507 (JP)**

(74) Representative: **Miller Sturt Kenyon**
**9 John Street**
**London WC1N 2ES (GB)**

# (54) READING PROCESSING APPARATUS, SERVER APPARATUS, READING PROCESSING SYSTEM, AND METHOD OF CONTROLLING READING PROCESSING APPARATUS

(57) A reading processing apparatus (30) includes: an obtaining device (312) configured to obtain a picked-up image in which an image of a display device (20) provided with at least two color display portions (21, 22) is picked up; and an estimation device (315) configured to estimate an elapsed time elapsed since a start of exposure of the display device (20) to an environment that has a predetermined environment temperature, based on the picked-up image obtained by the obtaining device (312). When the at least two color display portions (21, 22) are irradiated with light in a predetermined wavelength range, respective colors of the at least two color display portions (21, 22) fade with time at color fading rates different from each other and dependent on an ambient temperature.

FIG.4

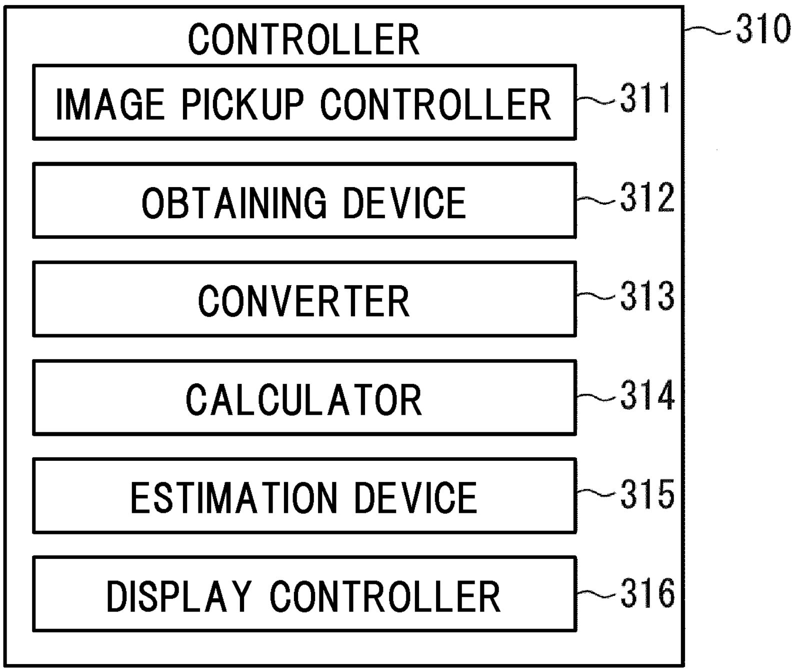




Printed by Jouve, 75001 PARIS (FR)

**Description**

## BACKGROUND OF THE INVENTION

### 1. Field of the Invention

The present invention relates to a reading processing apparatus, a server apparatus, a reading processing system, and a method of controlling a reading processing apparatus.

### 2. Description of the Related Art

Hitherto, it is well understood from experience that food and medicines, for example, generally require paying attention to the time elapsed since manufacture or the breaking of the seal, and to the storage temperature environment. For instance, dairy products deteriorate rapidly with time after the manufacture.

Most types of medicines expected to cure hard-to-cure diseases do not work unless the manners and temperature environments of storage are ones in which those particular medicines are supposed to be stored. Vaccines, which are a typical example of medicines used in winter every year, are biologically derived products to be stored in a manner that varies from one type to another type, and the potency of a vaccine changes depending on how the vaccine is handled. A rapid increase in the number of highly temperature-sensitive products is predicted for the future markets of food and medicine. Proper management of each individual product as a tool for solving social problems in terms of environment and resources is becoming more and more important in a diversity of uses.

In the equipment infrastructure business and similar businesses in industry, for example, temperature management is known as an important control point in the monitoring of a facility or the like, in product development process, and in quality control, and electronic measuring instruments are used for temperature management.

Electronic measuring instruments are not suitable for the temperature management of food and medicines because electronic measuring instruments have a battery driven-type operation principle, cost too high to be used for each individual article of food or each individual package of medicine, and are not easy to handle. Other temperature management tools include thermo labels, which utilize a thermo-sensitive ink material. Thermo labels, though easy to handle, do not have a temperature detection starting function, and are reversible due to the physical properties of their material and their color development principle. This limits objects whose temperature can be detected by thermo labels and scenes in which thermo labels can be used, and also makes it difficult to measure temperature with high precision.

In light of such demands of the market, a temperature management technology that uses a temperature history display material containing a photochromic compound has been proposed. The temperature history display material containing a photochromic compound makes use of characteristic physical properties of a material different from a thermo-sensitive ink, and can be made into a simple and easy temperature indicator, tag, or label.

Photochromism is a phenomenon in which two isomers (A and B) different from each other in absorption spectrum are generated reversibly from a single chemical species by the effect of light, without changing the molecular weight of the species. Photochromism is also a phenomenon in which an isomer A irradiated with light of a particular wavelength is transformed into an isomer B by a change in bonding manner or electronic state, and the resultant change in ultraviolet/visible absorption spectrum changes the color. The temperature management technology described above has three characteristics: (1) having a switch function, (2) losing color irrevocably when heated, and (3) developing a color that is visible and in a stable state. In the temperature management technology, the use of an optical function element having the three characteristics as a temperature history display material is proposed.

The principle of the temperature management technology using photochromism is to use a color change caused by an external stimulus, which means that power consumption is zero with the technology. The temperature management technology detects a change in ambient temperature from color fading characteristics and from a color difference caused by the elapse of time, and accordingly involves the displaying and recording of a temperature history, which can be used as evidence. The temperature management technology is also capable of making a device small in size and thin in film thickness, and is consequently not specific in terms of location in which the technology is used and objects to which the technology is applied. The ensuing flexibility makes the technology applicable to any object whose temperature is to be detected irrespective of the size and type of the object. The temperature management technology is further expected to provide high disposability, reduced cost, and convenience to a device made small in size and thin in film thickness by the technology, which means that the device is promising as a new temperature indicator.

However, with the temperature management technology described above, a color change in a small-sized and thin-film device is visually checked and determined as a measurement result, which lowers measurement precision and repeat accuracy. The temperature management technology is accordingly low in the measurement precision of the ambient temperature of an object, and has a possibility in that the elapsed time cannot determined appropriately. Another issue is that the temperature management technology is incapable of determining the elapsed time from the color of a

small-sized and thin-film device to begin with.

Thus, in this type of temperature management technology field, a reading processing apparatus, a server apparatus, a reading processing system, and a method of controlling a reading processing apparatus with which an elapsed time elapsed since the start of exposure of an object can precisely be estimated have been waited for.

## SUMMARY OF THE INVENTION

According to one embodiment of the present invention, there is provided a reading processing apparatus, including: an obtaining device configured to obtain a picked-up image in which an image of a display device provided with at least two color display portions is picked up; and an estimation device configured to estimate an elapsed time elapsed since a start of exposure of the display device to an environment that has a predetermined environment temperature, based on the picked-up image obtained by the obtaining device, wherein, when the at least two color display portions are irradiated with light in a predetermined wavelength range, respective colors of the at least two color display portions fade with time at color fading rates different from each other and dependent on an ambient temperature.

In the above-mentioned printer according to the one embodiment of the reading processing apparatus, preferably the estimation device is configured to estimate an actual environment temperature of the environment as well as the elapsed time elapsed since the start of exposure of the display device to the environment, based on the picked-up image obtained by the obtaining device.

In the above-mentioned printer according to the one embodiment of the reading processing apparatus, preferably the at least two color display portions include a first color display portion and a second color display portion, which differs from the first color display portion, wherein the reading processing apparatus further includes a calculator configured to calculate, from the picked-up image obtained by the obtaining device, a value based on a color of the first color display portion as a first value, and a value based on a color of the second color display portion as a second value, and the estimation device is configured to estimate the elapsed time and the actual environment temperature based on the first value and the second value, which are calculated by the calculator.

In the above-mentioned printer according to the one embodiment of the reading processing apparatus, preferably the calculator is configured to calculate, based on the picked-up image obtained by the obtaining device, a color fading rate of the color of the first color display portion as the first value, and a color fading rate of the color of the second color display portion as the second value.

In the above-mentioned printer according to the one embodiment of the reading processing apparatus, preferably the calculator is configured to calculate, based on the picked-up image obtained by the obtaining device, a color difference between the color of the first color display portion and a reference color as a first color difference, and a color difference between the color of the second color display portion and the reference color as a second color difference, calculate the color fading rate of the color of the first color display portion based on the calculated first color difference, and calculate the color fading rate of the color of the second color display portion based on the calculated second color difference.

In the above-mentioned printer according to the one embodiment of the reading processing apparatus, preferably the reading processing apparatus further includes a storage configured to store reference color information, which indicates the reference color, wherein the calculator is configured to read out the reference color information out of the storage, and calculate, based on the read reference color information, the color fading rate of the color of the first color display portion and the color fading rate of the color of the second color display portion.

In the above-mentioned printer according to the one embodiment of the reading processing apparatus, preferably the display device is further provided with a reference color display portion configured to display the reference color, and wherein the calculator is configured to detect the reference color that is displayed in the reference color display portion, based on the picked-up image obtained by the obtaining device.

In the above-mentioned printer according to the one embodiment of the reading processing apparatus, preferably the estimation device is configured to estimate the elapsed time and the actual environment temperature, based on the first value and the second value, which are calculated by the calculator, and on the first association information and the second association information, wherein the first association information includes first value information indicating the first value, environment temperature information indicating the environment temperature, elapsed time information indicating the elapsed time, and information that associates the environment temperature information and the elapsed time information for each piece of the first value information, and wherein the second association information includes second value information indicating the second value, environment temperature information indicating the environment temperature, elapsed time information indicating the elapsed time, and information that associates the environment temperature information and the elapsed time information for each piece of the second value information.

In the above-mentioned printer according to the one embodiment of the reading processing apparatus, preferably the first association information includes a table that associates the environment temperature and the elapsed time for each value of the first value, and wherein the second association information includes a table that associates the environment temperature and the elapsed time for each value of the second value.

In the above-mentioned printer according to the one embodiment of the reading processing apparatus, wherein the first association information includes a function that represents a dependency relation between the first value, the environment temperature, and the elapsed time, and wherein the second association information includes a function that represents a dependency relation between the second value, the environment temperature, and the elapsed time.

According to one embodiment of the present invention, there is provided a server apparatus, including: an obtaining device configured to obtain, from a reading processing apparatus, a picked-up image in which an image of a display device provided with at least two color display portions is picked up; an estimation device configured to estimate an elapsed time elapsed since a start of exposure of the display device to an environment that has a predetermined environment temperature, based on the picked-up image obtained by the obtaining device; and a communicator configured to output, to the reading processing apparatus, elapsed time information, which indicates the elapsed time estimated by the estimation device, wherein, when the at least two color display portions are irradiated with light in a predetermined wavelength range, respective colors of the at least two color display portions fade with time at color fading rates different from each other and dependent on an ambient temperature.

According to one embodiment of the present invention, there is provided a reading processing system, including: a reading processing apparatus; and a server apparatus, the reading processing apparatus including: an image pickup controller configured to control an image pickup device so that the image pickup device picks up an image of a range in which a display device provided with at least two color display portions is included; a first obtaining device configured to obtain the picked-up image picked up by the image pickup device from the image pickup device; and a communicator configured to output the picked-up image obtained by the first obtaining device to the server apparatus, the server apparatus including: a second obtaining device configured to obtain the picked-up image from the reading processing apparatus; an estimation device configured to estimate an elapsed time elapsed since a start of exposure of the display device to an environment that has a predetermined environment temperature, based on the picked-up image obtained by the second obtaining device; and a communicator configured to output, to the reading processing apparatus, elapsed time information, which indicates the elapsed time estimated by the estimation device, and wherein, when the at least two color display portions are irradiated with light in a predetermined wavelength range, respective colors of the at least two color display portions fade with time at color fading rates different from each other and dependent on an ambient temperature.

According to one embodiment of the present invention, there is provided a method of controlling a reading processing apparatus, including: obtaining a picked-up image in which an image of a display device provided with at least two color display portions is picked up; and estimating an elapsed time elapsed since a start of exposure of the display device to an environment that has a predetermined environment temperature, based on the picked-up image obtained in the obtaining a picked-up image, wherein, when the at least two color display portions are irradiated with light in a predetermined wavelength range, respective colors of the at least two color display portions fade with time at color fading rates different from each other and dependent on an ambient temperature.

## BRIEF DESCRIPTION OF THE DRAWINGS

Embodiments of the present invention will now be described by way of further example only and with reference to the accompanying drawings, in which:

FIG. 1 is a diagram for illustrating a configuration example of a reading processing system 1 according to an embodiment of the present invention.
FIG. 2 is a graph for showing an example of color fading characteristics of a color C1 in a first color display 21 in the embodiment.
FIG. 3 is a diagram for illustrating a hardware configuration example of a reading processing apparatus 30.
FIG. 4 is a diagram for illustrating a functional configuration example of the reading processing apparatus 30.
FIG. 5 is a diagram for illustrating an example of the flow of processing that is executed by the reading processing apparatus 30 to estimate an elapsed time elapsed since the start of exposure of a display device 20 to an environment having a predetermined environment temperature.
FIG. 6 is a table for showing an example of first association information.
FIG. 7 is a table for showing an example of second association information.
FIG. 8 is a graph for showing an example of an intersection point between two functions that are fit based on first combinations and second combinations, respectively.
FIG. 9 is a graph for showing an example of the first association information and the second association information, each of which is represented by a plurality of functions.
FIG. 10 is a diagram for illustrating an example of the display device 20 in Modification Example 2 of the embodiment.
FIG. 11 is a diagram for illustrating a configuration example of the reading processing system 1 according to Modification Example 3 of the embodiment.

## DESCRIPTION OF THE EMBODIMENTS

Now, embodiments of the present invention are described with reference to the drawings.

The outline of a reading processing system according to this embodiment is described first.

The reading processing system 1 includes a display device and a reading processing apparatus. The display device is provided with at least two color display portions. When the at least two color display portions are irradiated with light in a predetermined wavelength range, the colors of the color display portions fade with time at color fading rates different from each other and dependent on the ambient temperature. The temperature reading apparatus includes an obtaining device and an estimation device. The obtaining device obtains a picked-up image in which an image of the display device is picked up. The estimation device estimates an elapsed time elapsed since the start of exposure of the display device to an environment that has a predetermined environment temperature, based on the picked-up image picked obtained by the obtaining device. This enables the reading processing system to estimate an elapsed time elapsed since the start of exposure of an object with precision. The color fading rates are described later.

A detailed description is given below on each of the configuration of the reading processing system and processing that is executed by the reading processing apparatus (i.e., reading processing system) to estimate an elapsed time elapsed since the start of exposure of the display device to an environment having a predetermined environment temperature.

The configuration of a reading processing system 1 is described below with reference to FIG. 1. FIG. 1 is a diagram for illustrating a configuration example of the reading processing system 1 according to this embodiment. The reading processing system 1 is an example of the reading processing system described above.

As illustrated in FIG. 1, the reading processing system 1 includes a display device 20, an illumination apparatus UVL, an image pickup apparatus 25, and a reading processing apparatus 30. The reading processing system 1 may be configured so that the illumination apparatus UVL is omitted. Some or all of the display device 20, the illumination apparatus UVL, the image pickup apparatus 25, and the reading processing apparatus 30 in the reading processing system 1 may be configured unitarily.

The display device 20 is an example of the display device described above. The display device 20 includes a base sheet 20A and at least two color display portions provided on a front surface of the base sheet 20A. A case in which two color display portions, namely, a first color display portion 21 and a second color display portion 22, are provided on the front surface is described below as an example. In other words, the first color display portion 21 and the second color display portion 22 are each an example of the color display portions described above. The display device 20 may be configured so that three or more color display portions are provided on the front surface. The front surface here is one of the two surfaces of the base sheet 20A.

The display device 20 is attached to the package or the like of an object. The shape and size of the base sheet 20A of the display device 20 are therefore selected based on the specifications, size, usage, and the like of a target product. The object is a material to be managed by predetermined management. Examples of the predetermined management include temperature management, time management, and temperature-and-time management.

Specific examples of the object include food, medicines, cells, animals, and plants. The object is not limited thereto, and may be any material as long as the material is managed by the predetermined management. Illustration of the object is omitted from FIG. 1.

The display device 20 may be configured so that an adhesive layer is included on a rear surface of the base sheet 20A. This allows the display device 20 to be used while being attached to a surface or the like of the object. The rear surface of the base sheet 20A is a surface opposite from the front surface of the base sheet 20A out of the two surfaces of the base sheet 20A.

Examples of the substance of the base sheet 20A include glass, plastic, paper, and metal (e.g., aluminum). However, the base sheet 20A desirably has flexibility. The substance of the base sheet 20A may be other than those given above. The base sheet 20A may have a board shape or a film shape. The shape of the base sheet 20A may be other than those given above. A case in which the base sheet 20A has a card shape substantially rectangular in plan view is described below as an example.

The base sheet 20A may be configured to be transmissive of light that is radiated from the illumination apparatus UVL described above, or non-transmissive of the light.

The first color display portion 21 is an indicator that displays the color of a first material applied to a first color display surface.

The first color display surface is a part of or the entirety of one of surfaces of the first color display portion 21 that is opposite from the base sheet 20A. A case in which the first color display surface is the entirety of one of the surfaces of the first color display portion 21 that is opposite from the base sheet 20A as illustrated in FIG. 1 is described below as an example.

The first material is a material that develops a predetermined color C1 when a predetermined condition is satisfied. The first material is also a material from which the developed color C1 irreversibly fades with time when the

condition continues to be satisfied after the color C1 is developed. The color C1 may be any color.

In this embodiment, the fading of a color means a drop in at least one of the hue, chroma, and brightness of the color. The degree of fading of a color is accordingly expressed in this embodiment by the color difference between a color that serves as a reference of this color and a color that is reached after the fading.

The predetermined condition is, for example, the irradiation with light in a predetermined wavelength range. The predetermined condition may be other than this condition. The predetermined wavelength range is, for example, the wavelength range of an ultraviolet ray. The predetermined wavelength range may be other than this wavelength range.

To summarize, when the first color display portion 21 of the display device 20 in this example is irradiated with light in the predetermined wavelength range, the color C1 develops on the first color display surface, and the fading of the developed color C1 starts at the same time. In the display device 20, the proportion of the fading of the color C1 and an elapsed time elapsed since the start of the fading of the color C1 consequently correspond to each other on a one-to-one basis. In the following description, a color displayed in the first color display portion 21 in the process of fading of the color C1 developed in the first color display portion 21 is denoted by F1 for the purpose of discrimination from the color C1 and for the sake of convenience. That is, the color F1 refers to one of colors displayed in the first color display portion 21 in this process. In other words, the color F1 is one of colors displayed in the first color display portion 21 at a time that follows the start of the fading of the color C1.

The first material is, for example, a photochromic compound. Examples of the photochromic compound include diarylethene-based, azobenzene-based, spiropyran-based, and fulgide-based photochromic compounds. In particular, of those, the diarylethene-based photochromic compound is desired as the first material from the viewpoint of, for example, heat stability, repetition durability, high sensitivity, and photoreactivity under various temperatures. An example of the diarylethene-based photochromic compound is shown in the chemical formula (1):

Chemical Formula (1)

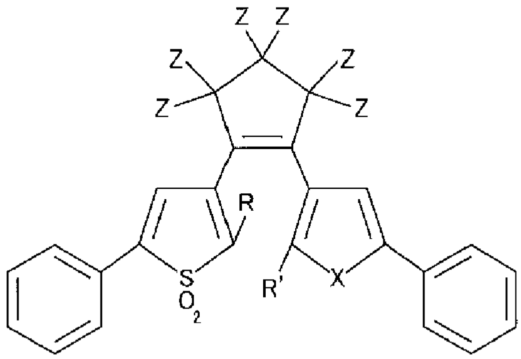

In the chemical formula (1), X represents a sulfur atom (S) or a sulfonyl group ($SO_2$), Z represents a hydrogen atom (H) or a fluorine atom (F), R and R' are identical to or different from each other, and each represent an alkyl group having 1 to 6 carbon atoms or a cycloalkyl group having 3 to 7 carbon atoms, and at least one of R and R' represents a secondary alkyl group having 3 to 7 carbon atoms.

The photochromic compound develops color by irradiation of light in a predetermined wavelength range (e.g., wavelength range of ultraviolet ray) (e.g., from 250 nm to 400 nm). The photochromic compound of the general formula (1) develops color by irradiation of the light by bonding two substituents R's (herein R' represents the same as R) bonded to two thiophene rings to form a ring (ring-closing). The photochromic compound that has developed color is stable under less than a given temperature, but the developed color fades (is lost) when exposed to the condition of the given temperature or more (when heated). It is preferred for the first material to develop a color that is in a stable state under visible light. In other words, the first material is desirably a material from which the color C1 does not fade when the material is irradiated with visible light.

For the reason given above, when the first color display portion 21 is irradiated with light in the predetermined wavelength range after the color C1 develops in the first color display portion 21, the developed color C1 fades with time at a color fading rate dependent on the ambient temperature of the display device 20. The surroundings of the display device 20 may be a room in which the display device 20 is present, a spherical space having a given radius from the display device 20 at the center, or another space whose shape depends on the display device 20

In this embodiment, the color fading rate at which a color fades is expressed by the color difference between this color and a color that is reached after the elapse of a unit time as a result of the fading of this color. In other words, when a color fades with time at a certain color fading rate, the color difference between this color and a color that is reached after the fading of this color increases in proportion to the color fading rate as the elapsed time becomes longer.

The second color display portion 22 is an indicator that displays the color of a second material applied to a second color display surface.

The second color display surface is a part of or the entirety of one of surfaces of the second color display portion 22 that is opposite from the base sheet 20A. A case in which the second color display surface is the entirety of one of the surfaces of the second color display portion 22 that is opposite from the base sheet 20A as illustrated in FIG. 1 is described below as an example.

The second material is a material having substantially the same configuration as that of the first material. A detailed description on the second material is therefore omitted. However, the second material develops a predetermined color C2 when irradiated with light in a predetermined wavelength range. The color C2 developed in the second material fades when the second material is irradiated with light in a predetermined wavelength range, at a color fading rate different from the color fading rate at which the color C1 developed in the first material fades. The color C2 developed in the second material may be the same color as the color C1 or a color different from the color C1.

To summarize, when the second color display portion 22 of the display device 20 in this example is irradiated with light in the predetermined wavelength range, the color C2 develops on the second color display surface, and the fading of the developed color C2 starts at the same time. In the display device 20, the proportion of the fading of the color C2 and an elapsed time elapsed since the start of the fading of the color C2 consequently correspond to each other on a one-to-one basis. In the following description, a color displayed in the second color display portion 22 in the process of fading of the color C2 developed in the second color display portion 22 is denoted by F2 for the purpose of discrimination from the color C2 and for the sake of convenience. That is, the color F2 refers to one of colors displayed in the second color display portion 22 in this process. In other words, the color F2 is one of colors displayed in the second color display portion 22 at a time that follows the start of the fading of the color C2.

Color fading characteristics of the color C1 in the first color display portion 21 and the color C2 in the second color display portion 22 are now described. The color fading characteristics of the color C2 in the second color display portion 22 are qualitatively the same as the color fading characteristics of the color C1 in the first color display portion 21, and a description on the color fading characteristics of the color C2 is therefore omitted.

FIG. 2 is a graph for showing an example of the color fading characteristics of the color C1 in the first color display portion 21 in the first embodiment. The color fading characteristics of the color C1 are expressed by changes similar to changes with time of the chroma of the color C1. Accordingly, changes with time of the chroma of the color C1 in the fading of the color C1 (i.e., temporal changes of the chroma of the color F1) are shown in FIG. 2 as an example of the color fading characteristics of the color C1. The axis of ordinate in the graph of FIG. 2 indicates the chroma of the color C1 in the first color display portion 21. The axis of abscissa in the graph of FIG. 2 indicates an elapsed time elapsed since the start of irradiation of the first color display portion 21 with light in a predetermined wavelength range.

As shown in FIG. 2, the color C1 developed in the first color display portion 21 by the irradiation with light in a predetermined wavelength range fades (is lost) with time after the irradiation. A curve "a" shown in FIG. 2 represents changes with time of the chroma of the color C1 at a certain temperature. A curve "b" shown in FIG. 2 represents changes with time of the chroma of the color C1 at a temperature higher than the certain temperature. A curve "c" shown in FIG. 2 represents changes with time of the chroma of the color C1 at a temperature higher than the temperature in the curve "b". The color fading rate at which the color C1 in the first color display portion 21 fades (is lost) thus increases as the ambient temperature of the display device 20 rises. To summarize, when the first color display portion 21 is irradiated with light in a predetermined wavelength range after the color C1 develops in the first color display portion 21, the developed color C1 fades with time at a color fading rate dependent on the ambient temperature of the display device 20.

The illumination apparatus UVL is operated by a user to radiate light in a predetermined wavelength range. The illumination apparatus UVL is set up at a position at which the display device 20 can be irradiated with the light. The illumination apparatus UVL may be configured to radiate the light in response to request from the reading processing apparatus 20.

The image pickup apparatus 25 is, for example, a camera including a charge-coupled device (CCD), a complementary metal oxide semiconductor (CMOS) device, or the like as an image pickup element, which converts collected light into an electric signal. The image pickup apparatus 25 is installed at a position at which an image of a range including the display device 20 can be picked up. The image pickup apparatus 25 outputs a picked-up image picked up by the image pickup apparatus 25 to the reading processing apparatus 30.

The image pickup apparatus 25 is connected to the reading processing apparatus 30 by a cable in a manner that allows communication between the two. The wired communication over the cable follows the standards of, for example, the Ethernet (a trademark) or Universal Serial Buses (USBs). The image pickup apparatus 25 may be connected to the reading processing apparatus 30 by wireless communication that follows the standards of Wi-Fi (a trademark) or other communication standards.

The reading processing apparatus 30 is an example of the reading processing apparatus described above. The reading processing apparatus 30 is, for example, a work station, a desktop personal computer (PC), a notebook PC, a tablet PC, a multi-function cellular phone terminal (smartphone), a cellular phone terminal, or a personal digital

assistant (PDA). The reading processing apparatus 30 may be an information processing apparatus other than those.

The reading processing apparatus 30 instructs the image pickup apparatus 25 to pick up an image in a range in which the image pickup apparatus 25 is capable of picking up an image. The reading processing apparatus 30 obtains the picked-up image picked up by the image pickup apparatus 25 from the image pickup apparatus 25. The reading processing apparatus 30 estimates an elapsed time elapsed since the start of exposure of the display device 20 to an environment having a predetermined environment temperature, based on the obtained picked-up image. In this example, the reading processing apparatus 30 estimates the actual environment temperature as well as the elapsed time based on the obtained picked-up image. The reading processing apparatus 30 then displays at least one of the estimated elapsed time and the estimated environment temperature.

The hardware configuration of the reading processing apparatus 30 is described below with reference to FIG. 3. FIG. 3 is a diagram for illustrating a hardware configuration example of the reading processing apparatus 30.

The reading processing apparatus 30 includes, for example, a central processing unit (CPU) 31, a storage 32, an input receiver 33, a communication device 34, a display 35, an expansion slot 36, a microphone 37, an external connection terminal 38, and a speaker 39. The components are connected to one another via a bus in a manner that allows communication among the components. The reading processing apparatus 30 holds communication to and from the image pickup apparatus 25 via the communicator 34.

The CPU 31 executes various programs stored in the storage 32. The CPU 31 may be another processor, for example, a field-programmable gate array (FPGA).

The storage 32 includes, for example, a hard disk drive (HDD), a solid-state drive (SSD), an electrically-erasable programmable read-only memory (EEPROM), a read-only memory (ROM), or a random access memory (RAM). The storage 32 may be an external storage apparatus connected by, for example, a USB or a similar digital input/output port, instead of storage built in the reading processing apparatus 30. The storage 32 stores, among others, various types of information processed by the reading processing apparatus 30, various images, and operation programs.

The input receiver 33 is an input apparatus, examples of which include a mouse, a keyboard, and a touch pad. The input receiver 33 may be configured unitarily with the display 35 as a touch panel.

The communicator 34 includes, for example, a digital input/output port, which is a USB or the like, and an Ethernet (a trademark) port.

The display 35 is, for example, a liquid crystal display panel or an organic electroluminescence (EL) display panel.

The expansion slot 36 is, for example, a slot to which a flash memory or a similar external storage apparatus is inserted.

The microphone 37 collects an acoustic signal.

The external connection terminal 38 is a USB terminal, for example.

The speaker 39 outputs an acoustic signal.

The reading processing apparatus 30 may have a configuration in which one or both of the input receiver 33 and the display 35 are omitted. In this case, the omitted apparatus is connected to the reading processing apparatus 30 as an external apparatus. The reading processing apparatus 30 may also have a configuration in which some or all of the expansion slot 36, the microphone 37, the external connection terminal 38, and the speaker 39 are omitted.

The functional configuration of the reading processing apparatus 30 is described below with reference to FIG. 4. FIG. 4 is a diagram for illustrating a functional configuration example of the reading processing apparatus 30.

The reading processing apparatus 30 includes a controller 310.

The controller 310 performs overall control of the reading processing apparatus 30. The controller 310 includes an image pickup controller 311, an obtaining device 312, a converter 313, a calculator 314, an estimation device 315, and a display controller 316. The functional sections included in the controller 310 are implemented by the CPU 31 by executing various programs that are stored in the storage 32. Some or all of the functional sections may be hardware functional sections such as large scale integration (LSI) circuits or application-specific integrated circuits (ASIC).

The image pickup controller 311 controls the image pickup apparatus 25 so that the image pickup apparatus 25 picks up an image in which the image pickup apparatus 25 is capable of picking up an image.

The obtaining device 312 obtains the picked-up image picked up by the image pickup apparatus 25 from the image pickup apparatus 25. The obtaining device 312 is an example of the obtaining device included in the reading processing apparatus.

The converter 313 converts the color space of the picked-up image obtained by the obtaining device 312 into a predetermined color space.

The calculator 314 calculates a first value based on the picked-up image whose color space has been converted by the converter 313. The first value is a value based on the color of the first color display portion 21, and a value that is used in estimation conducted by the estimation device 315. The calculator 314 also calculates a second value based on the post-conversion picked-up image. The second value is a value based on the color of the second color display portion 22, and is a value that is used in estimation conducted by the estimation device 315.

The estimation device 315 estimates an elapsed time elapsed since the start of exposure of the display device

20 to an environment that has a predetermined environment temperature, and the actual environment temperature as well, based on the first value and the second value calculated by the calculator 314. The estimation device 315 may be to estimate the elapsed time alone.

The display controller 316 is operated by the user to generate various images. The display controller 316 displays the generated images on the display 35.

Processing executed by the reading processing apparatus 30 to estimate an elapsed time elapsed since the start of exposure of the display device 20 to an environment having a predetermined environment temperature is described below with reference to FIG. 5. FIG. 5 is a diagram for illustrating an example of the flow of the processing that is executed by the reading processing apparatus 30 to estimate an elapsed time elapsed since the start of exposure of the display device 20 to an environment having a predetermined environment temperature. A case in which light radiation by the illumination apparatus UVL is started at a point in time that precedes the execution of the processing of Step S110 is illustrated in FIG. 5 as an example. In other words, in the case illustrated in FIG. 5, the color C1 and the color C2 have developed in the first color display portion 21 and the second color display portion 22, respectively, by that point in time. The case illustrated in FIG. 5 as an example is also a case in which the reading processing apparatus 30 is operated by the user at this point in time to start the estimation of the elapsed time. The case illustrated in FIG. 5 as an example is also a case in which the exposure of the display device 20 to the environment having a predetermined environment temperature starts at substantially or exactly the same time as this point in time.

The image pickup controller 311 instructs the image pickup apparatus 25 to pick up an image in a range in which the image pickup apparatus 25 is capable of picking up an image (Step S110).

Next, the obtaining device 312 obtains the picked-up image picked up in Step S110 by the image pickup apparatus 25 from the image pickup apparatus 25 (Step S120). In the following description, the picked-up image obtained by the obtaining device 312 in Step S120 is referred to as "picked-up image PI" for the sake of convenience.

Next, the converter 313 converts the color space of the picked-up image P1 into a predetermined color space (Step S130).

Processing executed in Step S130 is described. The color space of an image is more specifically a virtual space expressed by a coordinate system that indicates colors on the image. Examples of the color space of the image include a red-green-blue (RGB) color space, a cyan-magenta-yellow key plate (CMYK), a hue, saturation, brightness (HSB) color space, a hue, saturation, luminance (HLS) color space, and an La'b' color space. A case in which the picked-up image P1 has an RBG color space is described below as an example. The predetermined color space in the example described below is an HSB color space.

The picked-up image P1 may have a color space other than an RBG color space. The predetermined color space may be a color space other than an HSB color space. However, the predetermined color space is desirably a color space more suitable to processing of Step S140 than other color spaces (namely, a color space that is easier to execute the processing of Step S140 compared to other color spaces). The processing of Step S140 is processing of calculating the color difference. An HSB color space is suitable to the processing of calculating the color difference compared to an RGB color space. The processing of Step S130 may be omitted when the picked-up image P1 has the predetermined color space from the start.

When the predetermined color space is an La'b' color space, for example, the reading processing system 1 may have a configuration in which a spectrophotometric colorimetry apparatus (spectrophotometric colorimeter) is included instead of the image pickup apparatus 25. In this case, the reading processing apparatus 30 uses the spectrophotometric colorimetry apparatus to measure the color of the first color display portion 21 and the color of the second color display portion 22, and obtains information indicating the result of the measurement from the spectrophotometric colorimetry apparatus. The information in this case is a substitute for a picked-up image picked up by the image pickup apparatus 25.

After the processing of Step S130 is executed, the calculator 314 calculates the first value and second value described above, based on the picked-up image P1 whose color space has been converted in Step S130 (Step S140).

The processing of Step S140 is described. In the following description, the picked-up image P1 whose color space has been converted in Step S130 is referred to as "picked-up image P2" for the sake of convenience.

For example, the calculator 314 identifies, as a first area, by pattern matching or other types of image processing, an area that corresponds to the first color display portion 21 out of areas included in the picked-up image P2. The calculator 314 also identifies, as a second area, by pattern matching or other types of image processing, an area that corresponds to the second color display portion 22 out of areas included in the picked-up image P2. The calculator 314 detects color information of the identified first area as first color information. The first color information is color information about the color F1 of the first area at the time the picked-up image P2 (i.e., the picked-up image PI) is picked up. The calculator 314 also detects color information of the identified second area as second color information. The second color information is color information about the color F2 of the second area at the time the picked-up image P2 (i.e., the picked-up image PI) is picked up. In the following description, the time at which a picked-up image is picked up is referred to as "image pickup timing" for the sake of convenience.

In this embodiment, color information of a color is information including coordinate values that indicate the color in a color space expressed as a coordinate system. When the color space is an HSB color space, for example, the coordinate values are the hue, chroma, and brightness of the color. The calculator 314 accordingly detects information including the hue, chroma, brightness of the color F1 at the image pickup timing in Step S140 as the first color information. As the second color information, the calculator 314 detects information including the hue, chroma, brightness of the color F2 at the image pickup timing. The first color information may include other types of information in addition to the hue, chroma, and brightness of the color F1 at the image pickup timing. The second color information may include other types of information in addition to the hue, chroma, and brightness of the color F2 at the image pickup timing.

The calculator 314 calculates the color difference between the color F1 on the picked-up image P2 and a reference color as a first color difference A1 based on the detected first color information and on 0th reference color information. The 0th reference color information is information indicating color information of the reference color. The reference color is the color of the first color display surface before the color C1 develops in the first color display portion 21. The reference color may be a color other than this, for example, the color of the second color display surface before the color C2 develops in the second color display portion 22. A color space expressed by a coordinate system that indicates the reference color is the same as the color space of the picked-up image P2. The calculator 314 may use a known method or a method developed in the future to calculate the color difference. A detailed description on the calculation method is therefore omitted.

In calculating the first color difference A1, the calculator 314 reads out the 0th reference color information, which is stored in the storage 32 in advance, out of the storage 32. The calculator 314 then calculates the color difference between the color F1 on the picked-up image P2 and the reference color as the first color difference A1, based on the color information of the reference color that is indicated by the read 0th reference color information and on the detected first color information. The first color difference A1 is an example of the first color difference.

The calculator 314 also calculates the color difference between the reference color and the color C1 as a first color difference A2 based on the read 0th reference color information and on first reference color information. The first reference color information is information indicating color information of the color C1. A color space expressed by a coordinate system that indicates the color C1 is the same as the color space of the picked-up image P2.

The calculator 314 then calculates the ratio of the calculated first color difference A1 to the calculated first color difference A2 (the first color difference A1/the first color difference A2), namely, the color fading rate of the color C1, as the first value.

The calculator 314 also calculates the color difference between the color F2 on the picked-up image P2 and a reference color as a second color difference B1 based on the detected second color information and on 0th reference color information. The second color difference B1 is an example of the second color difference.

In calculating the second color difference B1, the calculator 314 reads the 0th reference color information, which is stored in the storage 32 in advance, out of the storage 32. The calculator 314 then calculates the color difference between the color F2 on the picked-up image P2 and the reference color as the second color difference B1, based on the color information of the reference color that is indicated by the read 0th reference color information and on the detected second color information.

The calculator 314 also calculates the color difference between the reference color and the color C2 as a second color difference B2 based on the read 0th reference color information and on second reference color information. The second reference color information is information indicating color information of the color C2. A color space expressed by a coordinate system that indicates the color C2 is the same as the color space of the picked-up image P2.

The calculator 314 then calculates the ratio of the calculated second color difference B1 to the calculated second color difference B2 (the second color difference B1/the second color difference B2), namely, the color fading rate of the color C2, as the second value.

The calculator 314 may be configured to calculate the first color difference A1 as the first value, or to calculate another value, specifically, a value based on the color of the first color display portion 21 at the image pickup timing, namely, the color F1, as the first value. The calculator 314 may be configured to calculate the second color difference B1 as the second value, or to calculate another value, specifically, a value based on the color of the second color display portion 22 at the image pickup timing, namely, the color F2, as the second value.

After the processing of Step S140 is executed, the estimation device 315 estimates an elapsed time elapsed since the start of exposure of the display device 20 to an environment that has a predetermined environment temperature, and the actual environment temperature as well, based on the first value and second value calculated in Step S140 (Step S150). In FIG. 5, the elapsed time is referred to as "exposure time".

Processing executed in Step S150 is described in detail. The estimation device 315 reads first association information, which is stored in the storage 32 in advance, out of the storage 32. The first association information is information including first value information, which indicates the first value, environment temperature information, which indicates the environment temperature, elapsed time information, which indicates the elapsed time, and information in which the environment temperature information and the elapsed time information are associated with each other for

each piece of first value information. The first association information is information obtained by, for example, conducting an experiment, a simulation, or the like. The first association information may be information that is generated based on measurement conducted by the reading processing apparatus 30 in advance. A case in which the first association information is a table shown in FIG. 6 is described below as an example. The table of FIG. 6 associates an environment temperature and an elapsed time for each value of the first value.

FIG. 6 is a table for showing an example of the first association information. In the table shown in FIG. 6, a plurality of combinations of an environment temperature and an elapsed time are associated with each of a plurality of values of the first value. The estimation device 315 refers to the first association information read out of the storage 32 to select combinations of an environment temperature and an elapsed time that are associated with the first value that is closest to the first value calculated in Step S140 by the calculator 314. In other words, the estimation device 315 identifies a first value whose difference from the first value calculated in Step S140 by the calculator 314 is smallest of all values of the first value included in the first association information. The estimation device 315 selects a plurality of combinations associated with the identified first value. The selected combinations are combinations of an environment temperature and an elapsed time.

For instance, when the first value identified by the estimation device 315 is "0.625", the estimation device 315 identifies a record holding a first value "0.6", which is closest to "0.625" out of all values of the first value included in the table of FIG. 6 (a record RC1 in the example of FIG. 6). The estimation device 315 then selects i (i is the number of environment temperatures included in the identified record) combinations included in the identified record. The selected combinations are combinations of an environment temperature and an elapsed time. In the following description, the i combinations are collectively referred to as "first combinations".

The estimation device 315 also reads second association information, which is stored in the storage 32 in advance, out of the storage 32. The second association information is information including second value information, which indicates the second value, environment temperature information, which indicates the environment temperature, elapsed time information, which indicates the elapsed time, and information in which the environment temperature information and the elapsed time information are associated with each other for each piece of second value information. The second association information is information obtained by, for example, conducting an experiment, a simulation, or the like. The second association information may be information that is generated based on measurement conducted by the reading processing apparatus 30 in advance. A case in which the second association information is a table shown in FIG. 7 is described below as an example. The table of FIG. 7 associates an environment temperature and an elapsed time for each value of the second value.

FIG. 7 is a table for showing an example of the second association information. In the table shown in FIG. 7, a plurality of combinations of an environment temperature and an elapsed time are associated with each of a plurality of values of the second value. The estimation device 315 refers to the second association information read out of the storage 32 to select combinations of an environment temperature and an elapsed time that are associated with the second value that is closest to the second value calculated in Step S140 by the calculator 314. In other words, the estimation device 315 identifies a second value whose difference from the second value calculated in Step S140 by the calculator 314 is smallest of all values of the second value included in the second association information. The estimation device 315 selects a plurality of combinations associated with the identified second value. The selected combinations are combinations of an environment temperature and an elapsed time.

For instance, when the second value identified by the estimation device 315 is "0.475", the estimation device 315 identifies a record holding a second value "0.5", which is closest to "0.475" out of all values of the second value included in the table of FIG. 7 (a record RC2 in the example of FIG. 7). The estimation device 315 then selects j (j is the number of temperatures included in the identified record) combinations included in the identified record. The selected combinations are combinations of an environment temperature and an elapsed time. In the following description, the j combinations are collectively referred to as "second combinations".

After selecting the first combinations and the second combinations, the estimation device 315 compares the i combinations included in the first combinations to the j combinations included in the second combinations, to select two combinations closest to each other. Specifically, the estimation device 315 selects two combinations that give the smallest value as the value of the left-hand side of Expression (1).

$$X=(T1_m-T2_n)\times Y_{mn}+(t1_m-t2_n)\times Z_{mn} \quad \text{... Expression (1)}$$

In Expression (1), m is a suffix that indicates the m-th combination out of the i combinations included in the first combinations, and n is a suffix that indicates the n-th combination out of the j combinations included in the second combinations. The symbol $T1_m$ represents an environment temperature that is included in the combination indicated by m. The symbol $T2_n$ represents an environment temperature that is included in the combination indicated by n. The symbol $t1_m$ represents an elapsed time that is included in the combination indicated by m. The symbol $t2_n$ represents

an elapsed time that is included in the combination indicated by n. The symbol $Y_{mn}$ represents a weighting coefficient defined by Expression (2).

$$Y_{mn}=(T1_m+T2_n)/2 \text{ ... Expression (2)}$$

The symbol $Z_{mn}$ represents a weighting coefficient defined by Expression (3).

$$Z_{mn}=(t1_m+t2_n)/2 \text{ ... Expression (3)}$$

In this manner, the estimation device 315 compares the i combinations included in the first combinations to the j combinations included in the second combinations, and selects two combinations closest to each other (i.e., a combination indicated by m and a combination indicated by n that give X the smallest value). The estimation device 315 estimates (identifies), as the environment temperature of the environment to which the display device 20 has been exposed, an average value of environment temperatures included in the two selected combinations. The estimation device 315 also estimates (identifies), as an elapsed time elapsed since the start of exposure of the display device 20 to the environment that has the estimated temperature, an average value of elapsed times included in the two selected combinations.

Expression (1) may be a different expression as long as a value depending on the magnitude of a difference between two combinations is calculated as X as in Expression (4). While only the right-hand side is multiplied by a weighting coefficient in Expression (4), multiplication by a weighting coefficient may be omitted.

$$X=(T1_m-T2_n)^2+(t1_m-t2_n)^2 \text{ ... Expression (4)}$$

The estimation device 315 may have a configuration in which a function that is fit based on the selected first combinations and a function that is fit based on the selected second combinations are calculated, and an environment temperature at an intersection point between the calculated functions is estimated (identified) as the environment temperature of the environment to which the display device 20 has been exposed. The estimation device 315 may also have a configuration in which an elapsed time at the intersection point is estimated (identified) as an elapsed time elapsed since the start of exposure of the display device 20 to the environment having the estimated environment temperature. FIG. 8 is a graph for showing an example of an intersection point between two functions that are fit based on first combinations and second combinations, respectively. The axis of ordinate in the graph of FIG. 8 indicates temperature. The axis of abscissa in the graph of FIG. 8 indicates time. A function FC1 shown in FIG. 8 is an example of the function that is fit based on the first combinations. A function FC2 shown in FIG. 8 is an example of the function that is fit based on the second combinations. An intersection point PT1 is an example of the intersection point between two functions that are fit based on the first combinations and the second combinations, respectively. In short, in the example of FIG. 8, the estimation device 315 estimates a temperature TS as the environment temperature and estimates a time tS as the elapsed time.

The first association information may be information in which, for each of a plurality of values of the first value, a function representing the relation between an environment temperature and an elapsed time that is based on the first value is associated with the first value. The second association information may be information in which, for each of a plurality of values of the second value, a function representing the relation between an environment temperature and an elapsed time that is based on the second value is associated with the second value. The estimation device 315 in this case identifies a function that is associated with the selected first value. The estimation device 315 identifies a function that is associated with the selected second value. The estimation device 315 estimates (identifies) an environment temperature at an intersection point between the identified functions as the environment temperature of the environment to which the display device 20 has been exposed. The estimation device 315 estimates (identifies) an elapsed time at the intersection point as an elapsed time elapsed since the start of exposure of the display device 20 to the environment that has the estimated environment temperature.

The first association information may be a function representing a dependency relation between the first value, the environment temperature, and the elapsed time. In other words, the first association information may be a function in which, when two out of three parameters of the first value, the environment temperature, and the elapsed time are given, the value of the one remaining parameter is calculated. The second association information may be a function representing a dependency relation between the second value, the environment temperature, and the elapsed time. In other words, the second association information may be a function in which, when two out of three parameters of the second value, the environment temperature, and the elapsed time are given, the value of the one remaining parameter

is calculated. The first association information and the second association information in this case can each be represented by a plurality of curves as shown in a graph of FIG. 9.

FIG. 9 is a graph for showing an example of the first association information and the second association information, each of which is represented by a plurality of functions. The axis of ordinate in the graph of FIG. 9 indicates values that may be taken as the first value and the second value. The axis of abscissa in the graph of FIG. 9 indicates time. A function FN11 to a function FN15 shown in FIG. 9 are each a curve plotted for one of five environment temperatures based on the first association information that is a function representing a dependency relation between the first value, the environment temperature, and the elapsed time. A function FN21 to a function FN25 shown in FIG. 9 are each a curve plotted for one of five environment temperatures based on the second association information that is a function representing a dependency relation between the second value, the environment temperature, and the elapsed time. A case in which the first value calculated by the calculator 314 in Step S140 is VI and the second value calculated by the calculator 314 in Step S140 is V2 is described as an example. The estimation device 315 calculates, as first intersection points, intersection points at which a straight line running from VI on the axis of ordinate and horizontal to the axis of abscissa intersects with the function FN11 to the function FN15. The estimation device 315 calculates, as second intersection points, intersection points at which a straight line running from V2 on the axis of ordinate and horizontal to the axis of abscissa intersects with the function FN21 to the function FN25. The estimation device 315 calculates straight lines connecting the five calculated first intersection points to the five calculated second intersection points, and selects a straight line out of the plurality of calculated straight lines. The selected straight line runs through the first intersection point and the second intersection point that have substantially matching environment temperatures and substantially matching elapsed times, and forms an angle closest to 90° of the plurality of calculated straight lines with respect to the axis of abscissa. The estimation device 315 estimates (identifies), as the environment temperature of the environment to which the display device 20 has been exposed, an average value of an environment temperature at the first intersection point through which the selected straight line runs and an environment temperature at the second intersection point through which the selected straight line runs. The estimation device 315 estimates (identifies), as an elapsed time elapsed since the start of exposure of the display device 20 to the environment having the estimated environment temperature, an average value of an elapsed time at the first intersection point through which the selected straight line runs and an elapsed time at the second intersection point through which the selected straight line runs.

After the processing of Step S150 is executed, the display controller 316 displays the environment temperature and elapsed time estimated by the estimation device 315 in Step S150 on the display 35 (Step S160), and the processing of FIG. 5 is ended.

The estimation device 315 may be configured to estimate only one of the environment temperature and the elapsed time in Step S150 described above. In this case, the display controller 316 displays only one of the environment temperature and the elapsed time that is estimated by the estimation device 315 on the display 35 in Step S160.

**<Modification Example 1 of the Embodiment**

Modification Example 1 of the embodiment is described below. In Modification Example 1 of the embodiment, components similar to those in the embodiment are denoted by the same reference symbols, and descriptions on the components are omitted.

In Step S150 of FIG. 5, the reading processing apparatus 30 according to Modification Example 1 of the embodiment uses an equation described below and the first value and second value calculated in Step S140 by the calculator 314 to estimate an elapsed time elapsed since the start of exposure of the display device 20 to an environment having a predetermined environment temperature, and estimate the actual environment temperature. In the following description, the first material and the second material are collectively referred to as "photochromic material" for the sake of convenience, as long as there is no need to discriminate the first material and the second material from each other.

As described above, the photochromic material develops color when irradiated with light in a predetermined wavelength range. A case in which the irradiation of one photochromic material with the light starts when a time t is 0 is described below. In the following description, molecules that have developed a color as a result of irradiation with the light out of molecules forming the photochromic material are referred to as "color-developed molecules", and molecules that lose their color with time out of the color-developed molecules are referred to as "color-losing molecules".

The color-developed molecules transition into color-losing molecules at certain time intervals at a probability determined by what photochromic material is used. Specifically, when the number of color-developed molecules at the time t is given as N(t), the number of color-developed molecules after the elapse of a minute time $\Delta t$ since the time t is in proportion to N(t) and to $\Delta t$. When a proportional constant in this proportional relation is given as $\lambda$, the number of color-developed molecules that lose their color during the elapse of the minute time $\Delta t$ (i.e., how many color-developed molecules are decreased) is denoted by $\Delta N$ and calculated by Expression (5).

$$\Delta N=\lambda N(t)\Delta t \text{ ... Expression (5)}$$

A differential equation expressed by Expression (6) is obtained from Expression (5). The symbol $\lambda$ represents a constant determined by the environment temperature of an environment to which the photochromic material is exposed and the type of the photochromic material, and the constant is determined from an experiment, a simulation, or the like. In the following description, the constant $\lambda$ is referred to as "color fading constant" for the sake of convenience.

$$dN/dt=-\lambda N \text{ ... Expression (6)}$$

With the number of color-developed molecules when the time t is 0 set as $N(0)=N_0$, Expression (6) is solved to obtain a solution expressed by Expression (7).

$$N(t)=N_0\exp(-\lambda t) \text{ ... Expression (7)}$$

Expression (7) is an expression representing a change in number of color-developed molecules that is in relation to the elapse of time. The ratio of N(t) to $N_0$ at the time t corresponds to the color fading rate described above. A color fading rate $Y_1(t)$ of the first material at the time t and a color fading rate $Y_2(t)$ of the second material at the time t are expressed as Expression (8) and Expression (9), respectively.

$$Y_1(t)=\exp(-\lambda_1 t) \text{ ... Expression (8)}$$

$$Y_2(t)=\exp(-\lambda_2 t) \text{ ... Expression (9)}$$

The symbol $\lambda_1$ represents a color fading constant of the first material in exposure to an environment temperature. The symbol $\lambda_2$ represents a color fading constant of the second material in exposure to this environment temperature. The color fading rates $Y_1(t)$ and $Y_2(t)$ can be calculated by, for example, the processing of Step S110 to Step S140 described above. The color fading rates $Y_1(t)$ and $Y_2(t)$ are calculated for each of a plurality of environment temperatures.

A color fading half-value period $t_{1(1/2)}$ of the first material is expressed as Expression (10) based on Expression (7). The color fading half-value period $t_{1(1/2)}$ of the first material is the length of time measured from when the time t is 0 until the number of color-developed molecules of the first material is halved. A color fading half-value period $t_{2(1/2)}$ of the second material is expressed as Expression (11) based on Expression (7). The color fading half-value period $t_{2(1/2)}$ of the second material is the length of time measured from when the time t is 0 until the number of color-developed molecules of the second material is halved.

$$t_{1(1/2)}=\ln(2)/\lambda_1 \text{ ... Expression (10)}$$

$$t_{2(1/2)}=\ln(2)/\lambda_2 \text{ ... Expression (11)}$$

With the color fading constant $\lambda 1$ and the color fading constant $\lambda 2$ determined, the color fading half-value period $t_{1(1/2)}$ of the first material and the color fading half-value period $t_{2(1/2)}$ of the second material can be calculated by Expression (10) and Expression (11). The color fading constant $\lambda 1$ and the color fading constant $\lambda 2$ each vary depending on the environment temperature. Accordingly, based on Expression (10) and Expression (11), the color fading half-value period $t_{1(1/2)}$ of the first material, the color fading half-value period $t_{2(1/2)}$ of the second material, and a ratio $t_{2(1/2)}/t_{1(1/2)}$ of the color fading half-value period $t_{2(1/2)}$ of the second material to the color fading half-value period $t_{1(1/2)}$ of the first material are calculated for each of the plurality of temperatures mentioned above. Fitting based on the calculated values of the color fading half-value period $t_{1(1/2)}$ of the first material is then performed to calculate a first expression, which represents a change in color fading half-value period $t_{1(1/2)}$ in relation to a change in environment temperature. Fitting based on the calculated values of the color fading half-value period $t_{2(1/2)}$ of the second material is then performed to calculate a second expression, which represents a change in color fading half-value period $t_{2(1/2)}$ in relation to a change in environment temperature. Fitting based on the calculated values of the color fading half-value period $t_{1(1/2)}$ of the first material is then performed to calculate a third expression, which represents a change in ratio $t_{2(1/2)}/t_{1(1/2)}$ in relation to

a change in environment temperature.

Expression (12) is used to calculate, for each value of the color fading rate $Y_1(t)$ calculated in advance, how many times the color fading half-value period of the first material is to be repeated to reach the calculated value of the color fading rate $Y_1(t)$.

$$Y_1(t)=(1/2)^{M1} \text{ ... Expression (13)}$$

The symbol M1 represents the number of times the color fading half-value period is repeated.

Expression (13) is used to calculate, for each value of the color fading rate $Y_2(t)$ calculated in advance, how many times the color fading half-value period of the second material is to be repeated to reach the calculated value of the color fading rate $Y_2(t)$.

$$Y_2(t)=(1/2)^{M2} \text{ ... Expression (12)}$$

The symbol M2 represents the number of times the color fading half-value period is repeated.

An elapsed time elapsed until the color fading rate of the first material reaches $Y_1(t)$ is the same as an elapsed time elapsed until the color fading rate of the second material reaches $Y_2(t)$, and Expression (13) is accordingly established.

$$t_{1(1/2)}M1=t_{2(1/2)}M2 \text{ ... Expression (13)}$$

Expression (14) is obtained from Expression (13).

$$t_{1(1/2)}/t_{2(1/2)}=M2/M1 \text{ ... Expression (14)}$$

This means that the ratio of the color fading half-value period $t_{1(1/2)}$ of the first material to the color fading half-value period $t_{2(1/2)}$ of the second material can be calculated by Expression (14) from the count M1 and count M2 calculated above. The environment temperature of the environment to which the first material and the second material have been exposed can be identified (estimated) based on the calculated ratio and the third expression, which is calculated in advance.

After the environment temperature is identified, the identified environment temperature is substituted into each of the first expression and the second expression, to thereby be able to calculate the color fading half-value period $t_{1(1/2)}$ of the first material and the color fading half-value period $t_{2(1/2)}$ of the second material. The calculated color fading half-value period $t_{1(1/2)}$ is multiplied by the count M1 (or the calculated color fading half-value period $t_{2(1/2)}$ is multiplied by the count M2), to thereby be able to calculate the elapsed time.

The reading processing apparatus 30 according to Modification Example 1 of the embodiment uses the method described above to estimate an elapsed time elapsed since the start of exposure of the display device 20 to an environment having a predetermined environment temperature, and estimate the actual environment temperature.

When there are three or more types of photochromic materials, the reading processing apparatus 30 identifies every combination of two types of photochromic materials selected from the three or more types of photochromic materials, and calculates the elapsed time and the environment temperature for each identified combination with the use of the method described above. The reading processing apparatus 30 then calculates an average value of the plurality of calculated elapsed times as an elapsed time elapsed since the start of exposure of the display device 20 to an environment having a predetermined environment temperature. The reading processing apparatus 30 also calculates an average value of the plurality of calculated environment temperatures as the environment temperature of this environment.

**<Modification Example 2 of the Embodiment**

Modification Example 2 of the embodiment is described below. In Modification Example 2 of the embodiment, components similar to those in the embodiment are denoted by the same reference symbols, and descriptions on the components are omitted.

As illustrated in FIG. 10, the display device 20 in Modification Example 2 of the embodiment is provided with a reference color information display portion 23, which displays information about the reference color described above, in addition to the first color display portion 21 and the second color display portion 22.

FIG. 10 is a diagram for illustrating an example of the display device 20 in Modification Example 2 of the embodiment. In the example illustrated in FIG. 10, information indicating the reference color is the reference color itself. That is, the material of the reference color is applied to a display surface of the reference color information display portion 23. The material of the reference color may be any material as long as the material is free of (or substantially free of) color fading with time.

When the display device 20 is provided with the reference color information display portion 23, the reading processing apparatus 30 detects, in Step S140, as the reference color, a color in an area that corresponds to the reference color information display portion 23 out of areas that are included in the picked-up image obtained in Step S120 by the obtaining device 312. The reading processing apparatus 30 then uses the detected reference color to calculate the first value and the second value.

The information indicating the reference color may be information other than the reference color itself, and may be a marker, a graphic figure, a numerical value, or the like that indicates the reference color. When the information indicating the reference color is a marker, for example, the reading processing apparatus 30 detects the marker through pattern matching or other types of processing, from the picked-up image obtained in Step S120 by the obtaining device 312. The reading processing apparatus 30 reads out information that indicates a color and that is associated with the detected marker out of the storage 32. The information in this case is stored in the storage 32 in advance. The reading processing apparatus 30 identifies a color that is indicated by the information read out of the storage 32 as the reference color.

The display device 20 may further be provided with a display portion in which information used for color calibration is displayed. This information is, for example, a given color itself. The given color may be any color. When the display device 20 is provided with the display portion for color calibration, the reading processing apparatus 30 detects a color in an area that corresponds to this display portion out of areas that are included in the picked-up image obtained in Step S120 by the obtaining device 312. The reading processing apparatus 30 searches information stored in the storage 32 in advance to read out information that indicates the given color out of the storage 32. The reading processing apparatus 30 calculates a correction amount by which the detected color is to be corrected so that the detected color matches the color indicated by the read information. The reading processing apparatus 30 performs correction based on the calculated correction amount to correct the color F1 of the first area at the time the picked-up image P2 (i.e., the picked-up image PI) is picked up, and to correct the color F2 of the second area at the time of image pickup. The display device 20 can reduce an error originating from an image pickup condition in this manner.

**<Modification Example 3 of the Embodiment>**

Modification Example 3 of the embodiment is described below with reference to FIG. 11. In Modification Example 3 of the embodiment, components similar to those in the embodiment are denoted by the same reference symbols, and descriptions on the components are omitted.

FIG. 11 is a diagram for illustrating a configuration example of the reading processing system 1 according to Modification Example 3 of the embodiment. As illustrated in FIG. 11, the reading processing system 1 according to Modification Example 3 of the embodiment includes, in addition to the display device 20, the illumination apparatus UVL, the image pickup apparatus 25, and the reading processing apparatus 30, a server apparatus 40 connected to the reading processing apparatus 30 via a network N in a manner that allows communication.

The network N is a local area network (LAN), a wide area network (WAN), the Internet, a cellular phone communication network, or the like.

The controller 310 of the reading processing apparatus 30 according to Modification Example 3 of the embodiment includes the image pickup controller 311, the obtaining device 312, and the display controller 316. In Modification Example 3, the reading processing apparatus 30 instructs the image pickup apparatus 25 to pick up an image in a range in which the image pickup apparatus 25 is capable of picking up an image, and obtains the picked-up image picked up by the image pickup apparatus 25 from the image pickup apparatus 25. The reading processing apparatus 30 outputs the obtained picked-up image to the server apparatus 40.

The server apparatus 40 includes an obtaining device 41, the calculator 314 described above, the estimation device 315 described above, and a communicator 42.

The obtaining device 42 obtains a picked-up image from the reading processing apparatus 30. The obtaining device 41 is an example of the obtaining device included in the server apparatus.

The communicator 42 outputs elapsed time information, which indicates an elapsed time estimated by the estimation device 315, to the reading processing apparatus 30. The communicator 42 also outputs environment temperature information, which outputs an environment temperature estimated by the estimation device 315, to the reading processing apparatus 30.

The server apparatus 40 estimates an elapsed time elapsed since the start of exposure of the display device 20 to an environment having a predetermined environment temperature, and the actual environment temperature as

well, based on the picked-up image obtained from the reading processing apparatus 30. The server apparatus 40 outputs each of the elapsed time information indicating the estimated elapsed time and the environment temperature information indicating the estimated environment temperature to the reading processing apparatus 30. The reading processing apparatus 30 obtains the elapsed time information and the environment temperature information from the server apparatus 40, and displays on the display 35 the elapsed time indicated by the obtained elapsed time information and the environment temperature indicated by the obtained environment temperature information.

As described above, the reading processing apparatus according to the embodiment (the reading processing apparatus 30 in this example) includes: an obtaining device (the obtaining device 312 in this example) configured to obtain a picked-up image in which an image of a display device (the display device 20 in this example) provided with at least two color display portions (the first color display portion 21 and the second color display portion 22 in this example) is picked up; and an estimation device (the estimation device 315 in this example) configured to estimate an elapsed time elapsed since a start of exposure of the display device to an environment having a predetermined environment temperature, based on the picked-up image obtained by the obtaining device. Further, when the at least two color display portions are irradiated with light in a predetermined wavelength range, respective colors of the at least two color display portions fade with time at color fading rates different from each other and dependent on an ambient temperature. This configuration enables the reading processing apparatus to estimate an elapsed time elapsed since the start of exposure of an object with precision.

The reading processing apparatus may be configured to estimate an actual environment temperature of the environment as well as the elapsed time elapsed since the start of exposure of the display device to the environment having the predetermined environment temperature, based on the picked-up image obtained by the obtaining device.

In the reading processing apparatus, the at least two color display portions may include a first color display portion (the first color display portion 21 in this example) and a second color display portion (the second color display portion 22 in this example), which differs from the first color display portion. The reading processing apparatus may further include a calculator (the calculator 314 in this example) configured to calculate, from the picked-up image obtained by the obtaining device, a value based on a color of the first color display portion as a first value, and a value based on a color of the second color display portion as a second value. The estimation device may be configured to estimate an elapsed time elapsed since the start of exposure of the display device to an environment that has a predetermined environment temperature, and the actual environment temperature as well, based on the first value and the second value, which are calculated by the calculator.

In the reading processing apparatus, the calculator may be configured to calculate, based on the picked-up image obtained by the obtaining device, a color fading rate of the color of the first color display portion as the first value, and a color fading rate of the color of the second color display portion as the second value.

In the reading processing apparatus, the calculator may be configured to calculate, based on the picked-up image obtained by the obtaining device, a color difference between the color of the first color display portion and a reference color as a first color difference (the first color difference A1 in this example), and a color difference between the color of the second color display portion and the reference color as a second color difference (the second color difference B1 in this example), calculate the color fading rate of the color of the first color display portion based on the calculated first color difference, and calculate the color fading rate of the color of the second color display portion based on the calculated second color difference.

The reading processing apparatus may further include a storage (the storage 32 in this example) configured to store reference color information (the 0th reference color information in this example), which indicates the reference color, and the calculator may be configured to read out the reference color information out of the storage, and calculate, based on the read reference color information, the color fading rate of the color of the first color display portion and the color fading rate of the color of the second color display portion.

In the reading processing apparatus, the display device may be further provided with a reference color display portion (the reference color information display portion 23 in this example) configured to display the reference color, and the calculator may be configured to detect the reference color that is displayed in the reference color display portion, based on the picked-up image obtained by the obtaining device.

In the reading processing apparatus, the estimation device may be configured to estimate an elapsed time elapsed since the start of exposure of the display device to an environment having a predetermined environment temperature, and the actual environment temperature as well, based on the first value and the second value, which are calculated by the calculator, and on the first association information and the second association information. The first association information may include first value information indicating the first value, environment temperature information indicating the environment temperature, elapsed time information indicating the elapsed time, and information that associates the environment temperature information and the elapsed time information for each piece of first value information. The second association information may include second value information indicating the second value, environment temperature information indicating the environment temperature, elapsed time information indicating the elapsed time, and information that associates the environment temperature information and the elapsed time information

for each piece of second value information.

In the reading processing apparatus, the first association information may be a table that associates the environment temperature and the elapsed time for each value of the first value, and the second association information may be a table that associates the environment temperature and the elapsed time for each value of the second value.

In the reading processing apparatus, the first association information may be a function that represents a dependency relation between the first value, the environment temperature, and the elapsed time, and the second association information may be a function that represents a dependency relation between the second value, the environment temperature, and the elapsed time.

A server apparatus (the server apparatus 40 in this example) includes: an obtaining device (the obtaining device 41 in this example) configured to obtain, from a reading processing apparatus, a picked-up image in which an image of a display device provided with at least two color display portions is picked up; an estimation device (the estimation device 315 in this example) configured to estimate an elapsed time elapsed since a start of exposure of the display device to an environment that has a predetermined environment temperature, based on the picked-up image obtained by the obtaining device; and a communicator (the communicator 42 in this example) configured to output, to the reading processing apparatus, elapsed time information, which indicates the elapsed time estimated by the estimation device. Further, when the at least two color display portions are irradiated with light in a predetermined wavelength range, respective colors of the at least two color display portions fade with time at color fading rates different from each other and dependent on an ambient temperature.

This concludes the detailed description given above on the embodiment of the present invention with reference to the drawings. The specific configuration of the present invention is not limited to the described embodiment, and a part of the embodiment may be, for example, changed, modified, replaced, or removed in other ways without departing from the scope of the present invention.

A program for implementing the function of any component in the apparatus described above (e.g., the reading processing apparatus 30 or the server apparatus 40) may be recorded on a computer-readable recording medium to be read onto and executed by a computer system. The definition of "computer system" here includes an operating system (OS) and a piece of hardware that is peripheral equipment or the like. The "computer-readable recording medium" refers to a flexible disk, a magneto-optical disc, a ROM, a compact disc (CD)-ROM, or a similar portable medium, or a storage apparatus built in a computer system, for example, a hard disk drive. The term "computer-readable recording medium" also encompasses what holds a program for a given period of time, such as a volatile memory (RAM) inside a computer system that serves as a server or a client when a program is transmitted over the Internet or a similar network or via a telephone line or a similar communication line.

The program described above may be transmitted from a computer system in which the program is stored in a storage apparatus or the like to another computer system via a transmission medium or on transmission waves in a transmission medium. The "transmission medium" through which the program is transmitted refers to a medium having a function of transmitting information, such as the Internet or a similar network (a communication network), or a telephone line or a similar communication line (a communication wire). The program described above may be a program that implements some of the functions described above. The program described above may be a program capable of implementing the function described above in combination with a program already recorded in the computer system, which is what is called a differential file (a differential program).

## Claims

**1.** A reading processing apparatus (30), comprising:

an obtaining device (312) configured to obtain a picked-up image in which an image of a display device (20) provided with at least two color display portions (21, 22) is picked up; and
an estimation device (315) configured to estimate an elapsed time elapsed since a start of exposure of the display device (20) to an environment that has a predetermined environment temperature, based on the picked-up image obtained by the obtaining device (312),
wherein, when the at least two color display portions (21, 22) are irradiated with light in a predetermined wavelength range, respective colors of the at least two color display portions (21, 22) fade with time at color fading rates different from each other and dependent on an ambient temperature.

**2.** The reading processing apparatus (30) according to claim 1, wherein the estimation device (315) is configured to estimate an actual environment temperature of the environment as well as the elapsed time elapsed since the start of exposure of the display device (20) to the environment, based on the picked-up image obtained by the obtaining device (312).

3. The reading processing apparatus (30) according to claim 2,
wherein the at least two color display portions (21, 22) include a first color display portion (21) and a second color display portion (22), which differs from the first color display portion (21),
wherein the reading processing apparatus (30) further comprises a calculator (314) configured to calculate, from the picked-up image obtained by the obtaining device (312), a value based on a color of the first color display portion (21) as a first value, and a value based on a color of the second color display portion (22) as a second value, and
wherein the estimation device (315) is configured to estimate the elapsed time and the actual environment temperature based on the first value and the second value, which are calculated by the calculator (314).

4. The reading processing apparatus (30) according to claim 3, wherein the calculator (314) is configured to calculate, based on the picked-up image obtained by the obtaining device (312), a color fading rate of the color of the first color display portion (21) as the first value, and a color fading rate of the color of the second color display portion (22) as the second value.

5. The reading processing apparatus (30) according to claim 4, wherein the calculator (314) is configured to calculate, based on the picked-up image obtained by the obtaining device (312), a color difference between the color of the first color display portion (21) and a reference color as a first color difference, and a color difference between the color of the second color display portion (22) and the reference color as a second color difference, calculate the color fading rate of the color of the first color display portion (21) based on the calculated first color difference, and calculate the color fading rate of the color of the second color display portion (22) based on the calculated second color difference.

6. The reading processing apparatus (30) according to claim 5, further comprising a storage (32) configured to store reference color information, which indicates the reference color,
wherein the calculator (314) is configured to read out the reference color information out of the storage (32), and calculate, based on the read reference color information, the color fading rate of the color of the first color display portion (21) and the color fading rate of the color of the second color display portion (22).

7. The reading processing apparatus (30) according to claim 5,
wherein the display device (20) is further provided with a reference color display portion (23) configured to display the reference color, and
wherein the calculator (314) is configured to detect the reference color that is displayed in the reference color display portion (23), based on the picked-up image obtained by the obtaining device (312).

8. The reading processing apparatus (30) according to any one of claims 3 to 7,
wherein the estimation device (315) is configured to estimate the elapsed time and the actual environment temperature, based on the first value and the second value, which are calculated by the calculator (314), and on first association information and second association information,
wherein the first association information includes first value information indicating the first value, environment temperature information indicating the environment temperature, elapsed time information indicating the elapsed time, and information that associates the environment temperature information and the elapsed time information for each piece of the first value information, and
wherein the second association information includes second value information indicating the second value, environment temperature information indicating the environment temperature, elapsed time information indicating the elapsed time, and information that associates the environment temperature information and the elapsed time information for each piece of the second value information.

9. The reading processing apparatus (30) according to claim 8,
wherein the first association information includes a table that associates the environment temperature and the elapsed time for each value of the first value, and
wherein the second association information includes a table that associates the environment temperature and the elapsed time for each value of the second value.

10. The reading processing apparatus (30) according to claim 8,
wherein the first association information includes a function that represents a dependency relation between the first value, the environment temperature, and the elapsed time, and
wherein the second association information includes a function that represents a dependency relation between the second value, the environment temperature, and the elapsed time.

**11.** A server apparatus (40), comprising:

an obtaining device (312) configured to obtain, from a reading processing apparatus (30), a picked-up image in which an image of a display device (20) provided with at least two color display portions (21, 22) is picked up;
an estimation device (315) configured to estimate an elapsed time elapsed since a start of exposure of the display device (20) to an environment that has a predetermined environment temperature, based on the picked-up image obtained by the obtaining device (312); and
a communicator configured to output, to the reading processing apparatus (30), elapsed time information, which indicates the elapsed time estimated by the estimation device (315),
wherein, when the at least two color display portions (21, 22) are irradiated with light in a predetermined wavelength range, respective colors of the at least two color display portions (21, 22) fade with time at color fading rates different from each other and dependent on an ambient temperature.

**12.** A reading processing system, comprising:

a reading processing apparatus (30); and
a server apparatus (40),
the reading processing apparatus (30) including:

an image pickup controller (311) configured to control an image pickup device so that the image pickup device picks up an image of a range in which a display device (20) provided with at least two color display portions (21, 22) is included;
a first obtaining device (312) configured to obtain the picked-up image picked up by the image pickup device from the image pickup device; and
a communicator configured to output the picked-up image obtained by the first obtaining device (312) to the server apparatus (40),

the server apparatus (40) including:

a second obtaining device (312) configured to obtain the picked-up image from the reading processing apparatus (30);
an estimation device (315) configured to estimate an elapsed time elapsed since a start of exposure of the display device (20) to an environment that has a predetermined environment temperature, based on the picked-up image obtained by the second obtaining device (312); and
a communicator configured to output, to the reading processing apparatus (30), elapsed time information, which indicates the elapsed time estimated by the estimation device (315), and

wherein, when the at least two color display portions (21, 22) are irradiated with light in a predetermined wavelength range, respective colors of the at least two color display portions (21, 22) fade with time at color fading rates different from each other and dependent on an ambient temperature.

**13.** A method of controlling a reading processing apparatus (30), the method comprising:

obtaining a picked-up image in which an image of a display device (20) provided with at least two color display portions (21, 22) is picked up; and
estimating an elapsed time elapsed since a start of exposure of the display device (20) to an environment that has a predetermined environment temperature, based on the picked-up image obtained in the obtaining a picked-up image,
wherein, when the at least two color display portions (21, 22) are irradiated with light in a predetermined wavelength range, respective colors of the at least two color display portions (21, 22) fade with time at color fading rates different from each other and dependent on an ambient temperature.

# FIG.1

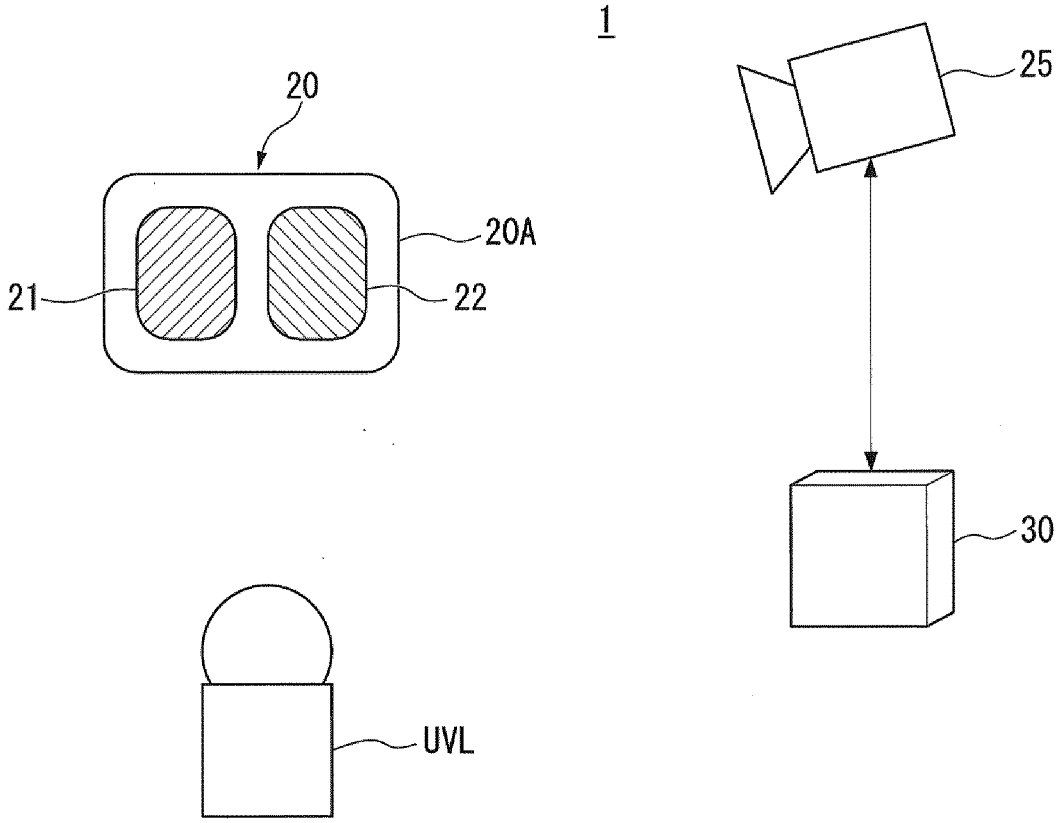

# FIG.2

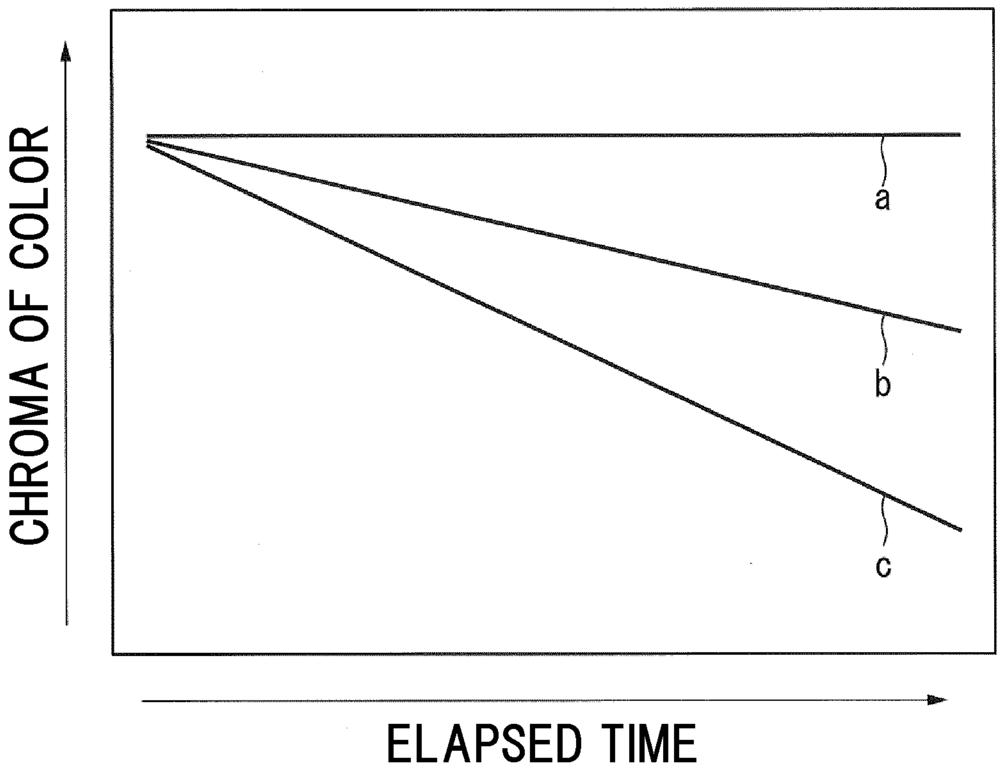

FIG.3

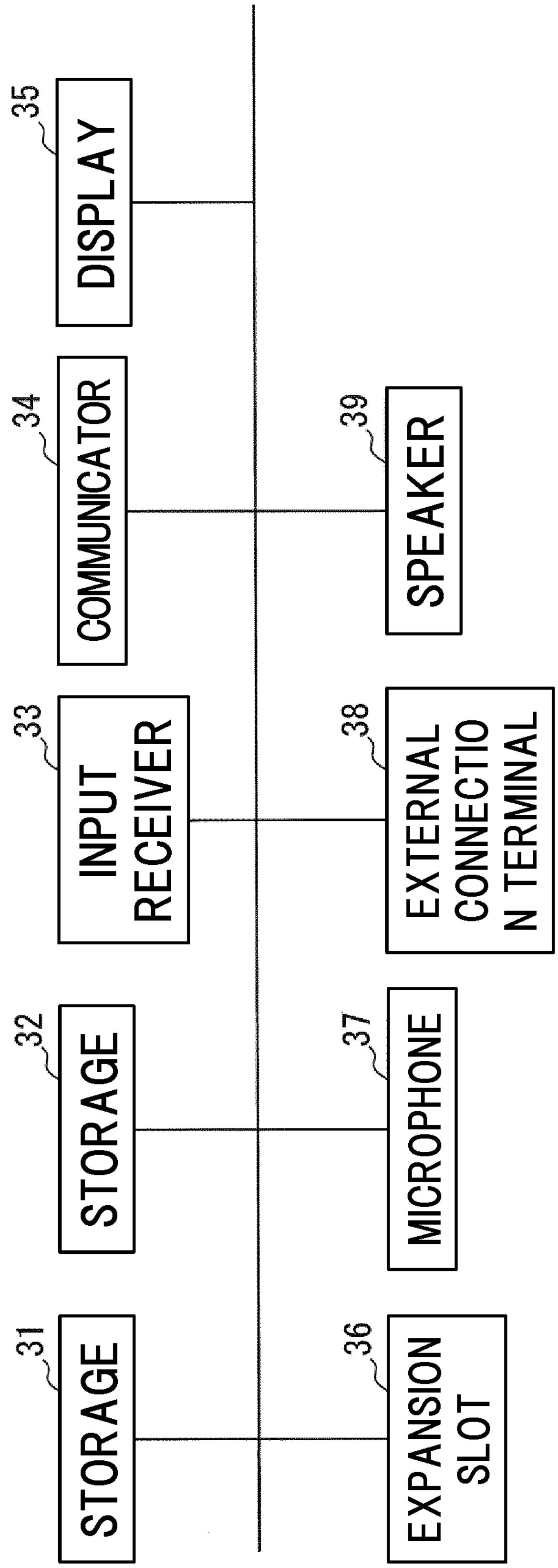
35
DISPLAY
34
COMMUNICATOR
39
SPEAKER
33
INPUT RECEIVER
38
EXTERNAL CONNECTIO N TERMINAL
32
STORAGE
37
MICROPHONE
31
STORAGE
36
EXPANSION SLOT

FIG.4

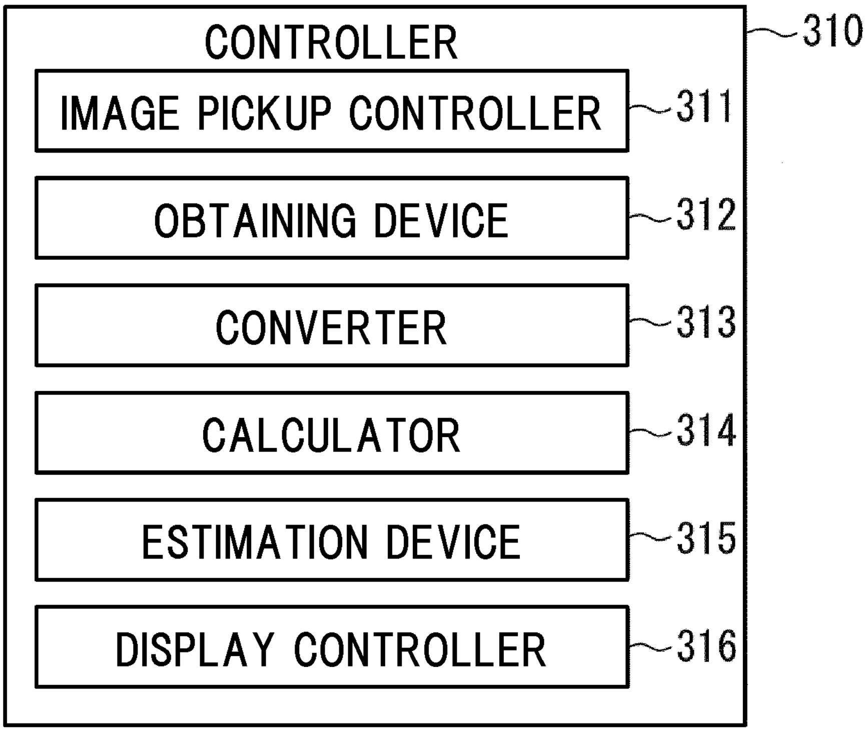
CONTROLLER
IMAGE PICKUP CONTROLLER
OBTAINING DEVICE
CONVERTER
CALCULATOR
ESTIMATION DEVICE
DISPLAY CONTROLLER
310
311
312
313
314
315
316

FIG.5

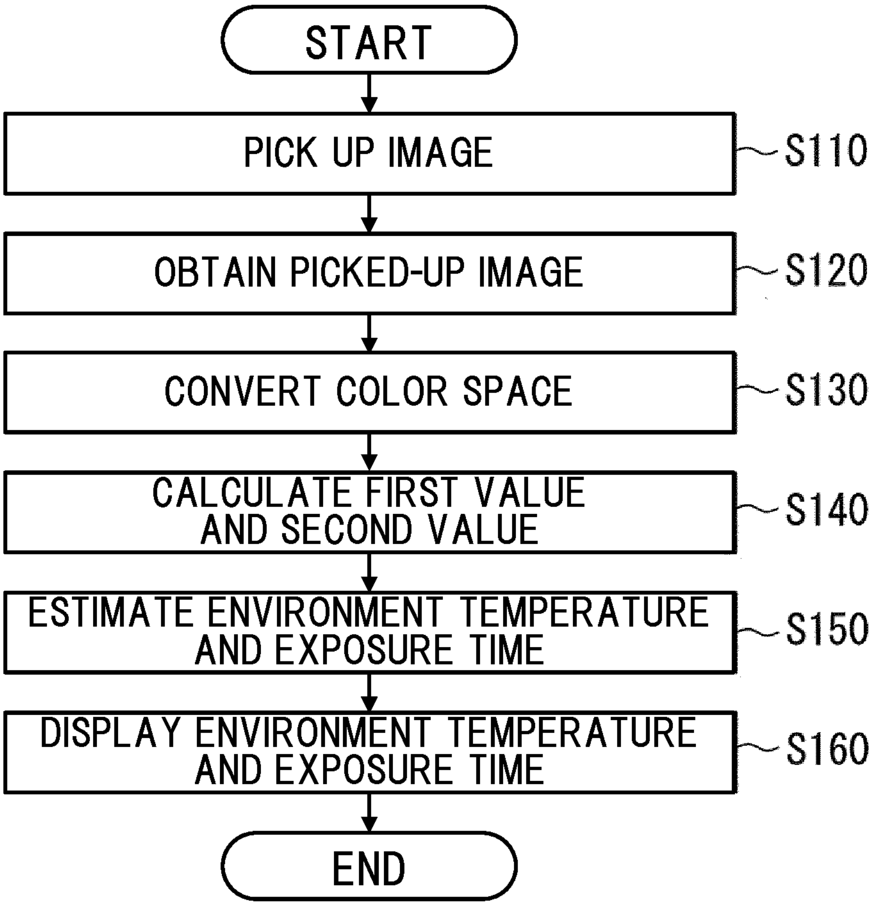
START
PICK UP IMAGE
OBTAIN PICKED-UP IMAGE
CONVERT COLOR SPACE
CALCULATE FIRST VALUE AND SECOND VALUE
ESTIMATE ENVIRONMENT TEMPERATURE AND EXPOSURE TIME
DISPLAY ENVIRONMENT TEMPERATURE AND EXPOSURE TIME
END
S110
S120
S130
S140
S150
S160

# FIG.6

RC1

| | | | | | | |
|---|---|---|---|---|---|---|
| FIRST VALUE 0.95 | TEMPERATURE (℃) | 15 | 20 | 25 | 30 | 35 |
| | ELAPSED TIME (MINUTES) | 17 | 15.5 | 14.2 | 13.1 | 12.2 |
| FIRST VALUE 0.9 | TEMPERATURE (℃) | 15 | 20 | 25 | 30 | 35 |
| | ELAPSED TIME (MINUTES) | 35.1 | 31.9 | 29.2 | 27 | 25.1 |
| FIRST VALUE 0.8 | TEMPERATURE (℃) | 15 | 20 | 25 | 30 | 35 |
| | ELAPSED TIME (MINUTES) | 74.4 | 67.6 | 62 | 57.2 | 53.1 |
| FIRST VALUE 0.7 | TEMPERATURE (℃) | 15 | 20 | 25 | 30 | 35 |
| | ELAPSED TIME (MINUTES) | 118.9 | 108.1 | 99.1 | 91.5 | 84.9 |
| FIRST VALUE 0.6 | TEMPERATURE (℃) | 15 | 20 | 25 | 30 | 35 |
| | ELAPSED TIME (MINUTES) | 170.3 | 154.8 | 141.9 | 131 | 121.6 |
| FIRST VALUE 0.5 | TEMPERATURE (℃) | 15 | 20 | 25 | 30 | 35 |
| | ELAPSED TIME (MINUTES) | 231 | 210 | 192.5 | 177.7 | 165 |
| FIRST VALUE 0.4 | TEMPERATURE (℃) | 15 | 20 | 25 | 30 | 35 |
| | ELAPSED TIME (MINUTES) | 305.4 | 277.7 | 254.5 | 234.9 | 218.2 |
| FIRST VALUE 0.3 | TEMPERATURE (℃) | 15 | 20 | 25 | 30 | 35 |
| | ELAPSED TIME (MINUTES) | 401.3 | 364.8 | 334.4 | 308.7 | 286.7 |
| FIRST VALUE 0.2 | TEMPERATURE (℃) | 15 | 20 | 25 | 30 | 35 |
| | ELAPSED TIME (MINUTES) | 536.5 | 487.7 | 447.1 | 412.7 | 383.2 |
| FIRST VALUE 0.1 | TEMPERATURE (℃) | 15 | 20 | 25 | 30 | 35 |
| | ELAPSED TIME (MINUTES) | 767.5 | 697.7 | 639.6 | 590.4 | 548.2 |

# FIG.7

| | | | | | | |
|---|---|---|---|---|---|---|
| FIRST VALUE 0.95 | TEMPERATURE (℃) | 15 | 20 | 25 | 30 | 35 |
| | ELAPSED TIME (MINUTES) | 10.3 | 9.5 | 8.8 | 8.3 | 7.8 |
| FIRST VALUE 0.9 | TEMPERATURE (℃) | 15 | 20 | 25 | 30 | 35 |
| | ELAPSED TIME (MINUTES) | 21.1 | 19.5 | 18.2 | 17 | 16 |
| FIRST VALUE 0.8 | TEMPERATURE (℃) | 15 | 20 | 25 | 30 | 35 |
| | ELAPSED TIME (MINUTES) | 44.6 | 41.3 | 38.5 | 36 | 33.8 |
| FIRST VALUE 0.7 | TEMPERATURE (℃) | 15 | 20 | 25 | 30 | 35 |
| | ELAPSED TIME (MINUTES) | 71.3 | 66 | 61.5 | 57.5 | 54 |
| FIRST VALUE 0.6 | TEMPERATURE (℃) | 15 | 20 | 25 | 30 | 35 |
| | ELAPSED TIME (MINUTES) | 102.2 | 94.6 | 88.1 | 82.4 | 77.4 |
| FIRST VALUE 0.5 | TEMPERATURE (℃) | 15 | 20 | 25 | 30 | 35 |
| | ELAPSED TIME (MINUTES) | 138.6 | 128.4 | 119.5 | 111.8 | 105 |
| FIRST VALUE 0.4 | TEMPERATURE (℃) | 15 | 20 | 25 | 30 | 35 |
| | ELAPSED TIME (MINUTES) | 183.3 | 169.7 | 158 | 147.8 | 138.8 |
| FIRST VALUE 0.3 | TEMPERATURE (℃) | 15 | 20 | 25 | 30 | 35 |
| | ELAPSED TIME (MINUTES) | 240.8 | 223 | 207.6 | 194.2 | 182.4 |
| FIRST VALUE 0.2 | TEMPERATURE (℃) | 15 | 20 | 25 | 30 | 35 |
| | ELAPSED TIME (MINUTES) | 321.9 | 298 | 277.5 | 259.6 | 243.9 |
| FIRST VALUE 0.1 | TEMPERATURE (℃) | 15 | 20 | 25 | 30 | 35 |
| | ELAPSED TIME (MINUTES) | 460.5 | 426.4 | 397 | 371.4 | 348.9 |

RC2

FIG.8

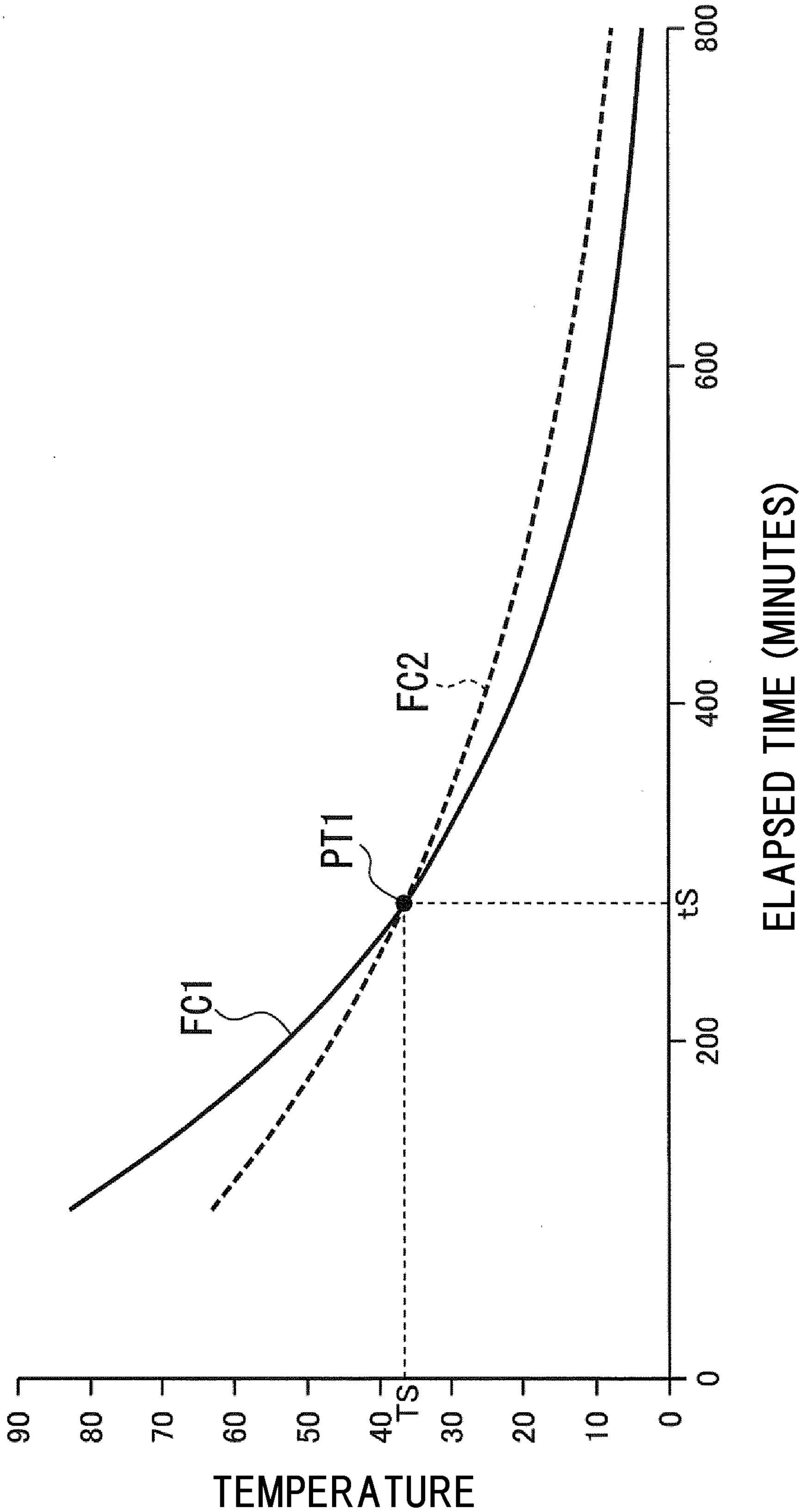
TEMPERATURE
90
80
70
60
50
40
TS
30
20
10
0
0
200
400
600
800
tS
ELAPSED TIME (MINUTES)
FC1
FC2
PT1

FIG.9

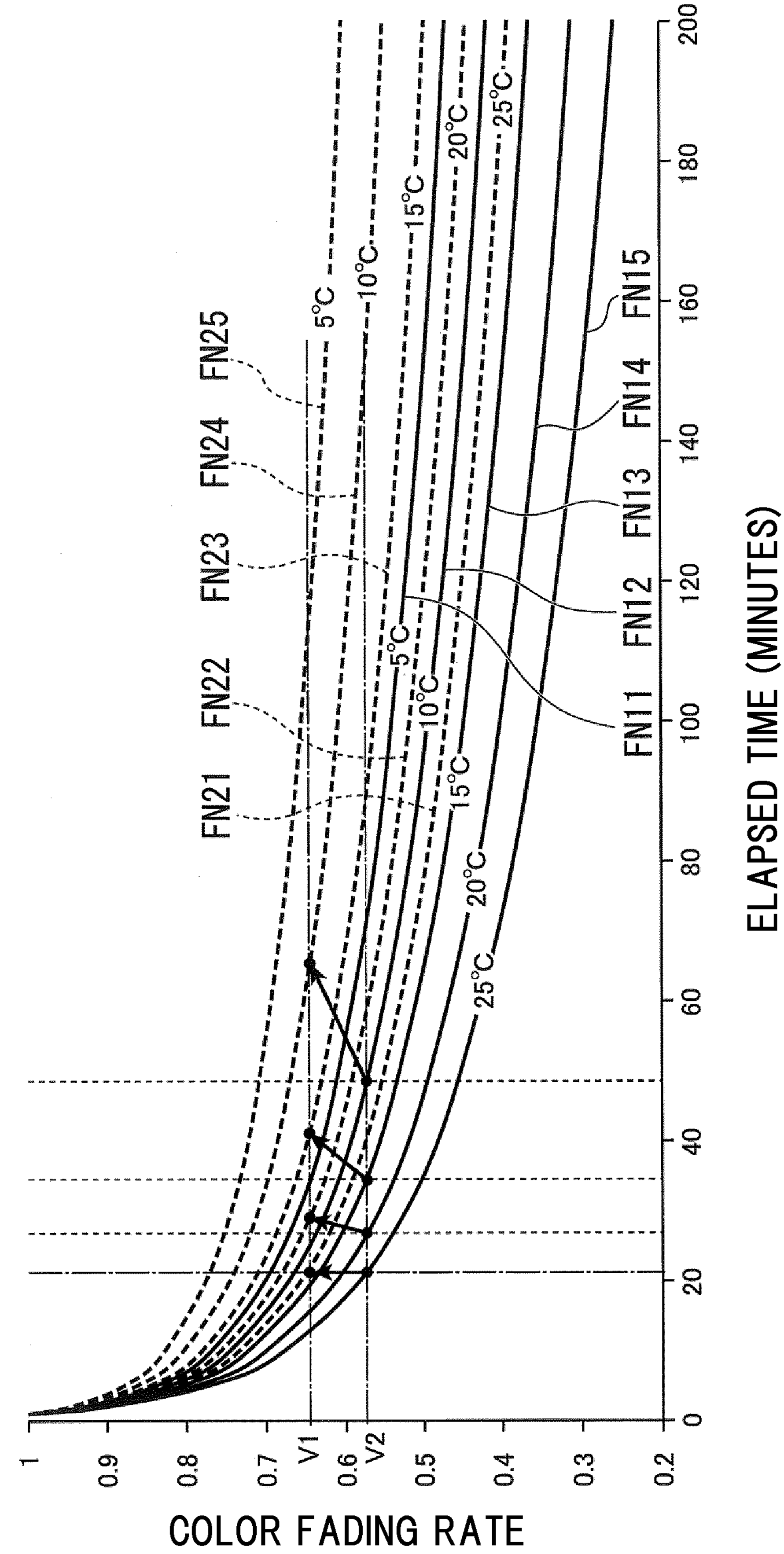
COLOR FADING RATE
ELAPSED TIME (MINUTES)
1
0.9
0.8
0.7
V1
0.6
V2
0.5
0.4
0.3
0.2
0
20
40
60
80
100
120
140
160
180
200
FN11
FN12
FN13
FN14
FN15
FN21
FN22
FN23
FN24
FN25
5°C
10°C
15°C
20°C
25°C

FIG.10

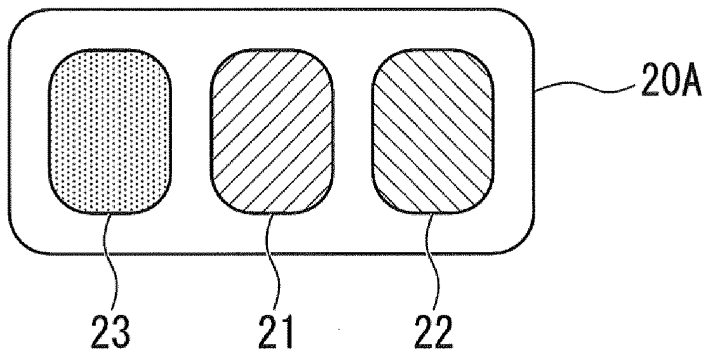


FIG.11

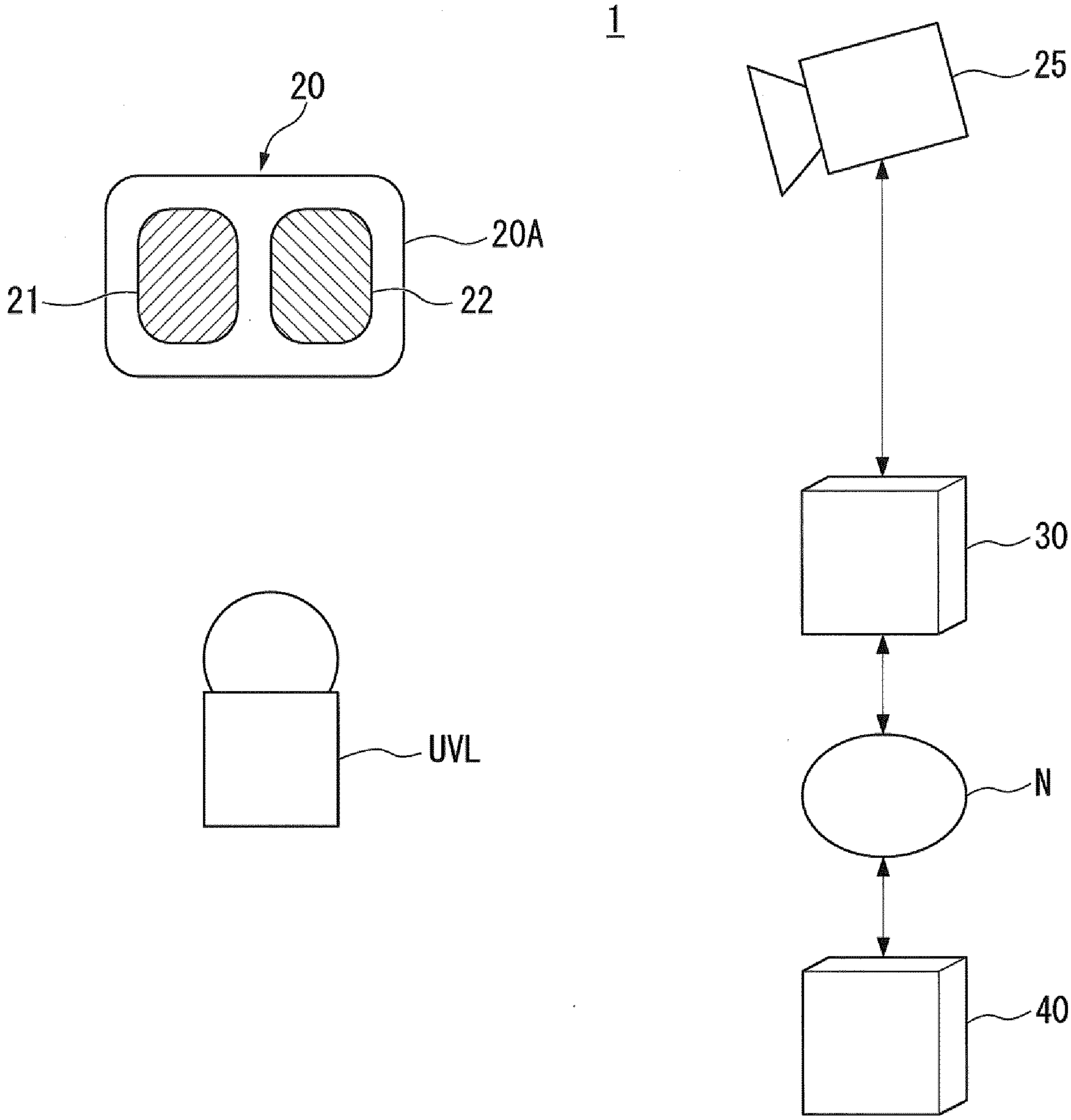

# [ Chemical Formula (1) ]

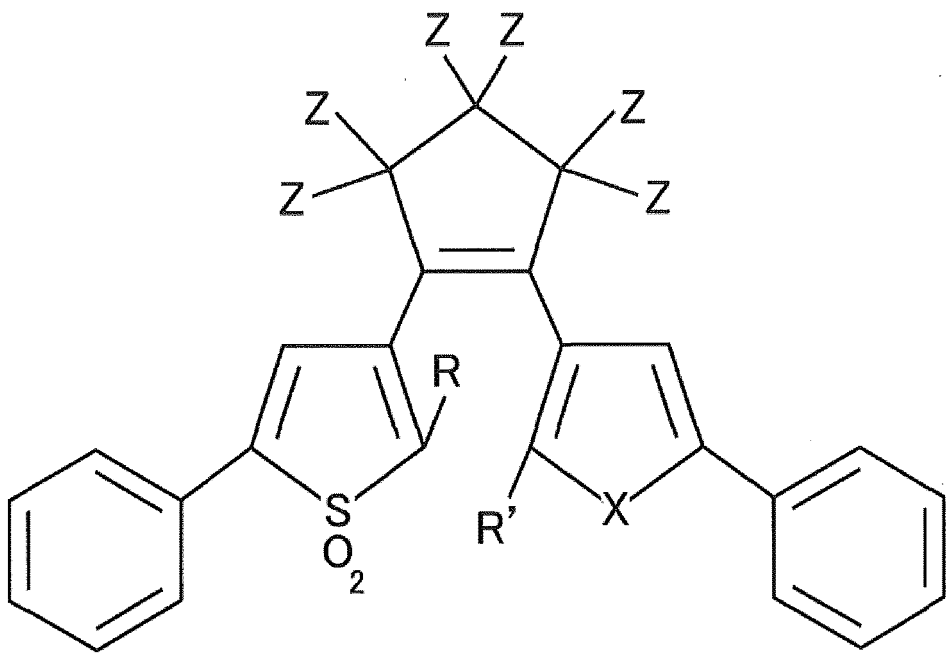

Europäisches Patentamt
European Patent Office
Office européen des brevets

# EUROPEAN SEARCH REPORT

Application Number
EP 19 17 6511

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2017/038848 A1 (GODO KAISHA IP BRIDGE 1 [JP]; YAEGAKI BIO-INDUSTRY INC [JP]) 9 March 2017 (2017-03-09)<br>* abstract *<br>* figures 1-14 *<br>* paragraph [0009] - paragraph [0102] *<br>& US 2018/253571 A1 (TAKETANI MASATOSHI [JP] ET AL) 6 September 2018 (2018-09-06)<br>----- | 1-13 | INV.<br>G01K3/04<br>G01K11/12<br>H04N1/00<br>H04N1/56 |
| X | JP 2000 131152 A (TOSHIBA TEC KK) 12 May 2000 (2000-05-12)<br>* abstract *<br>* figures 1-6 *<br>* paragraph [0012] - paragraph [0045] *<br>----- | 1-13 | |
| X | EP 3 316 183 A1 (HITACHI LTD [JP]) 2 May 2018 (2018-05-02)<br>* abstract *<br>* figures 1-5 *<br>* paragraphs [0016], [0017], [0025] - [0040], [0045] - [0058] *<br>----- | 1-13 | |
| | | | TECHNICAL FIELDS SEARCHED (IPC) |
| | | | G01K<br>G01W<br>H04N |

The present search report has been drawn up for all claims

1

| Place of search | Date of completion of the search | Examiner |
|---|---|---|
| The Hague | 23 September 2019 | Visser, Michelle L. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# ANNEX TO THE EUROPEAN SEARCH REPORT ON EUROPEAN PATENT APPLICATION NO. EP 19 17 6511

This annex lists the patent family members relating to the patent documents cited in the above-mentioned European search report. The members are as contained in the European Patent Office EDP file on
The European Patent Office is in no way liable for these particulars which are merely given for the purpose of information.

23-09-2019

| Patent document cited in search report | Publication date | Patent family member(s) | Publication date |
|---|---|---|---|
| WO 2017038848 A1 | 09-03-2017 | CN 108027890 A | 11-05-2018 |
| | | DE 112016003968 T5 | 14-06-2018 |
| | | JP 6233734 B2 | 22-11-2017 |
| | | JP 2018059936 A | 12-04-2018 |
| | | JP WO2017038848 A1 | 31-08-2017 |
| | | US 2018253571 A1 | 06-09-2018 |
| | | WO 2017038848 A1 | 09-03-2017 |
| JP 2000131152 A | 12-05-2000 | NONE | |
| EP 3316183 A1 | 02-05-2018 | CN 107710234 A | 16-02-2018 |
| | | EP 3316183 A1 | 02-05-2018 |
| | | JP 6392987 B2 | 19-09-2018 |
| | | JP WO2016208051 A1 | 05-04-2018 |
| | | KR 20180002751 A | 08-01-2018 |
| | | US 2018189535 A1 | 05-07-2018 |
| | | WO 2016208051 A1 | 29-12-2016 |

EPO FORM P0459

For more details about this annex : see Official Journal of the European Patent Office, No. 12/82